# FASCICULE DE BREVET EUROPEEN

(11) **EP 3 976 986 B1**
(45) Date de publication et mention de la délivrance du brevet: **04.03.2026**
(21) Numéro de dépôt: 20737262.4
(22) Date de dépôt: 20.05.2020
(51) Int. Cl.: F16D 11/14

(54) **DISPOSITIF D'ACCOUPLEMENT DE DEUX ARBRES ET DISPOSITIF D'ATTELAGE MUNI D'UN TEL DISPOSITIF D'ACCOUPLEMENT**
VORRICHTUNG ZUM KUPPELN ZWEIER WELLEN SOWIE MIT EINER SOLCHEN KUPPLUNGSVORRICHTUNG VERSEHENE ANHÄNGERKUPPLUNG
DEVICE FOR COUPLING TWO SHAFTS, AND HITCHING DEVICE PROVIDED WITH SUCH A COUPLING DEVICE

(30) Priorité: 24.05.2019 FR 1905536
(43) Date de publication de la demande: 06.04.2022
(73) Titulaire: Tracto-Lock, 11400 Verdun en Lauragais (FR)
(72) Inventeur: RIBO, Romain, 11400 VERDUN EN LAURAGAIS (FR); MOURET, Cyril, 11400 VERDUN EN LAURAGAIS (FR)
(74) Mandataire: Plasseraud IP
(86) Numéro de dépôt international: PCT/FR2020/050846
(87) Numéro de publication internationale: WO 2020/240120

(56) Documents cités:
- EP-A1- 3 924 199
- EP-A2- 2 098 741
- EP-A2- 2 098 741
- DE-A1- 1 524 593
- DE-A1- 1 524 593
- DE-A1- 102019 110 478
- JP-U- H0 249 811
- US-A- 1 540 247
- US-A- 3 204 731

## Description

La présente invention concerne un dispositif d'accouplement de deux arbres. Il s'agit plus particulièrement d'un accouplement entre un arbre menant et un arbre mené. L'invention concerne également un dispositif d'attelage qui comporte un dispositif d'accouplement de deux arbres.

### Domaine technique

Le problème technique à l'origine du dispositif qui va être décrit plus loin est de venir accoupler semi-automatiquement un arbre mené à un arbre menant lorsqu'un outil doté d'un arbre récepteur, tel par exemple un outil agricole, vient s'atteler à un engin, tel par exemple un tracteur agricole, doté d'un arbre menant, appelé couramment prise de force dans le domaine agricole. L'accouplage semi-automatique permet au conducteur de l'engin de réaliser l'accouplement depuis un poste de conduite de l'engin, en restant à distance des moyens d'accouplement.

### Technique antérieure

Les documents FR2995756 et FR3018029 concernent chacun un dispositif d'attelage destiné notamment à l'attelage d'un outil agricole à un engin tel un tracteur agricole. L'outil est alors équipé d'un bâti attelé tandis que l'engin est équipé d'un bâti d'attelage.

Ces documents montrent des moyens permettant de réaliser un attelage semi-automatique d'un outil à un engin, ledit attelage étant réalisé par un conducteur de l'engin sans que celui-ci ait à quitter son poste de conduite.
Le document JP-H02 49811U montre un système d'attelage à quatre points pour tracteurs agricoles. Le document US-1540247 montre un système d'embrayage commandé par un levier. Le document US-3204731 montre à la fois un système d'embrayage à dents et un système de freinage. Le document DE 10 2019 110478 concerne un dispositif spécifique d'une boîte de vitesses automobile. Le document EP-3924199 concerne un dispositif d'entrainement pour un essieu arrière de véhicule hybride.

Le document EP2098741 concerne un ensemble de désengagement/déconnexion pour le désengagement d'un générateur d'une boîte de vitesse, comprenant une première vis à billes intérieure possédant un filetage incliné sur sa surface extérieure et entourant et engagé avec un arbre rotatif moteur de générateur pour entraîner la rotation de la vis à billes intérieure. La vis à billes intérieure peut être fixée à un élément d'engagement possédant des dents découpées et interverrouillable engagées avec des dents correspondantes d'un élément d'engagement de la boîte de vitesse. Une vis à billes extérieure peut entourer et pivoter normalement avec la vis à billes intérieure. Une piste hélicoïdale de billes peut être formée entre les vis à billes intérieure et extérieure. Un frein peut être prévu pour ralentir ou arrêter la rotation de la vis à billes extérieure de sorte que la vis à billes intérieure pivote par rapport à la vis à billes extérieure le long de la piste de billes et coulisse axialement depuis la boîte de vitesse, désengageant ainsi le générateur de l'arbre moteur de la boîte de vitesse.

Le problème technique est d'améliorer les systèmes existant notamment en les simplifiant tout en garantissant, d'une part, un attelage semi-automatique et, d'autre part, une parfaite transmission de puissance en toutes circonstances de l'engin vers l'outil.

### Résumé

La présente divulgation vient améliorer la situation.

Il est proposé un dispositif d'accouplement de deux arbres bout à bout, comportant une paire de crabots, chaque crabot étant conformé de manière à pouvoir être rendu solidaire d'une extrémité d'arbre à accoupler et les deux crabots étant de formes complémentaires.

Selon la présente invention, un premier crabot est monté pivotant dans un premier carter ; un second crabot est monté pivotant dans un palier intermédiaire ; le palier intermédiaire est monté coulissant dans un second carter supposé fixe, le palier intermédiaire pouvant coulisser par rapport au second carter selon une direction parallèle aux deux arbres à accoupler, dite direction longitudinale, et le palier intermédiaire est précontraint élastiquement en direction du premier carter.

Une telle structure permet d'accoupler deux arbres, chaque arbre étant monté en rotation dans son propre carter. À chaque arbre est associé un crabot. Pour un accouplement, on vient alors aligner les arbres et les pousser l'un vers l'autre. Il y a alors peu de chance pour que les crabots soient orientés l'un par rapport à l'autre de telle sorte que les dents des crabots engrènent directement. On peut faire tourner un arbre par rapport à l'autre pour obtenir une orientation relative des crabots autorisant leur engrènement par translation. La structure proposée permet alors à un crabot de se déplacer axialement par rapport à l'autre et d'assurer ensuite un bon engrènement des dents des crabots grâce à la précontrainte élastique.

On entend ici par crabot un moyen d'accouplement mécanique comportant des dents et des rainures permettant de réaliser un accouplement direct avec un moyen d'accouplement de même type, de forme complémentaire.

Pour faciliter l'alignement des arbres, on peut prévoir par exemple que le premier carter porte une première surface conique faisant face au second carter, que le second carter porte une seconde surface conique faisant face au premier carter, les deux surfaces coniques étant de formes complémentaires de manière à réaliser un alignement des deux arbres, que la première surface conique ou la seconde surface conique est montée coulissante longitudinalement par rapport au carter qui la porte, et que la surface conique coulissante est précontrainte élastiquement en direction de l'autre surface conique.

Dans cette dernière variante de réalisation, pour s'assurer qu'un bon alignement est réalisé avant que les crabots n'engrènent, on peut prévoir avantageusement que la surface conique coulissante et le carter correspondant sont munis de moyens retardateurs tels que le déplacement de ladite surface conique ne peut être initié que lorsqu'une contrainte minimale prédéfinie en direction longitudinale est exercée sur ladite surface conique vers le carter qui la porte. Ici les organes de centrage correspondant aux surfaces coniques (mâle et femelle) et qui sont de formes complémentaires, s'emboitent et permettent un parfait pré-positionnement des organes d'accouplement formés par les crabots. Il est ainsi assuré que les organes d'accouplement sont bien positionnés les uns par rapport aux autres de manière à éviter tout bris mécanique. On prévoit de préférence une phase dans laquelle les crabots sont parfaitement alignés mais pas encore au contact l'un de l'autre.

Selon une variante de réalisation avantageuse, les moyens retardateurs peuvent comporter au moins une tige de guidage solidaire de la surface conique coulissante ; ladite tige de guidage peut comporter une zone de section rétrécie pouvant coulisser dans un alésage à l'intérieur du carter correspondant ; le carter correspondant peut comporter une fente s'étendant transversalement par rapport à l'alésage recevant au moins partiellement la tige de guidage et intersectant ledit alésage, et un organe élastique (à titre d'exemple non limitatif : une goupille bêta) présentant deux branches peut être logée dans ladite fente, la section rétrécie étant disposée entre les deux branches de l'organe élastique (par exemple la goupille bêta).

L'homme du métier saura de suite trouver d'autres moyens pour réaliser la fonction retardateur évoquée. Cette fonction peut être par exemple encore être réalisée par un ou plusieurs cliquets précontraints élastiquement. Alors que dans ces exemples cette fonction se réalise mécaniquement automatiquement, elle pourrait aussi être commandée et réalisée par un actionneur, par exemple hydraulique. Cette fonction retardateur est avantageuse pour garantir un prépositionnement des organes d'accouplement (crabots) et un crabotage sans risque de bris.

Une forme de réalisation avantageuse d'un tel dispositif d'accouplement peut en outre prévoir que ledit dispositif comporte des moyens de connexion et de verrouillage, lesdits moyens comportant de part et d'autre d'un crabot à chaque fois une saillie solidaire du carter correspondant, l'autre carter portant, d'une part, à chaque fois des moyens de guidage pour amener une saillie vers un logement et, d'autre part, un crochet monté pivotant autour d'un axe transversal entre une position dite ouverte permettant à la saillie d'entrer et de sortir de son logement et une position dite fermée dans laquelle le crochet peut maintenir la saillie dans son logement en l'empêchant d'en sortir.

Dans cette forme de réalisation, on peut aussi prévoir que :
- les deux crochets sont montés pivotants sur un axe transversal commun, et que le mouvement des crochets est commandé par un vérin double effet hydraulique ; et/ou
- au moins un crochet porte un pion de verrouillage destiné à coopérer avec une paire de mâchoires, lesdites mâchoires étant portées par le même carter (10) que celui portant les crochets et étant disposées de telle sorte que le pion de verrouillage se trouve entre les mâchoires lorsque le crochet correspondant est en position fermée.

Dans le cas où des mâchoires sont prévues, on peut alors par exemple prévoir que pour chaque paire de mâchoires, une mâchoire est fixe et l'autre est mobile, qu'un ressort de rappel précontraint la mâchoire mobile vers la mâchoire fixe, et qu'un vérin permet d'agir à l'encontre du ressort de rappel pour éloigner la mâchoire mobile de la mâchoire fixe.

Selon un autre aspect, il est proposé un dispositif d'attelage d'un outil, tel un outil agricole, sur un système de relevage d'un engin, tel un tracteur agricole, équipé d'un arbre de sortie menant, comprenant :
- un premier bâti dit bâti d'attelage et doté d'organes de fixation permettant une fixation au système de relevage de l'engin,
- un second bâti dit bâti attelé et doté d'organes de fixation permettant une fixation à l'outil,
   le bâti d'attelage et le bâti attelé présentant chacun une face de jonction, lesdites faces de jonction étant adaptées pour permettre l'appairage du bâti attelé au bâti d'attelage,
- des moyens de verrouillage relatif du bâti attelé sur le bâti d'attelage dans la position appairée,

caractérisé en ce que ledit dispositif d'attelage comporte en outre un dispositif d'accouplement de deux arbres bout-à-bout tel que décrit ci-dessus,
ledit dispositif d'accouplement étant destiné à être monté entre l'arbre de sortie menant de l'engin et un arbre mené de l'outil.

Dans un tel dispositif d'attelage, le bâti attelé peut par exemple comporter deux bras montés pivotants entre une position rapprochée dans laquelle les extrémités libres des bras portent le premier carter du dispositif d'accouplement et une position ouverte dans laquelle les bras sont écartés et leurs extrémités libres distantes du premier carter.

Dans une forme de réalisation préférée de ce dispositif d'attelage, le bâti d'attelage présente une structure mécanosoudée comportant une traverse de laquelle s'étendent d'un même côté de ladite traverse deux jambes ; le bâti attelé peut lui aussi présenter une structure mécanosoudée comportant une traverse supérieure, une traverse inférieure et deux montants reliant les extrémités de la traverse inférieure aux extrémités de la traverse supérieure ; la traverse du bâti d'attelage présente avantageusement au moins deux pions de centrage et la traverse supérieure du bâti attelé comporte une coiffe s'étendant vers le bâti d'attelage et présentant au moins deux logements destinés chacun à recevoir un pion de centrage.

Dans cette forme de réalisation, on peut en outre prévoir que chaque jambe du bâti d'attelage présente à son extrémité libre une platine sur laquelle est disposé au moins un doigt de verrouillage et que la traverse inférieure du bâti attelé comporte des trous de verrouillage disposé de manière à pouvoir accueillir les doigts de verrouillage.

Selon une forme de réalisation préférée, le dispositif d'attelage comporte par exemple des moyens d'actionnement des bras montés pivotants, lesdits moyens d'actionnement coopérant avec la platine sur laquelle est disposé au moins un doigt de verrouillage de telle sorte qu'en position de verrouillage du bâti attelé sur le bâti d'attelage les bras sont dans leur position ouverte.

Pour un dispositif d'attelage tel que décrit ici, on prévoit par exemple que le premier carter du dispositif d'accouplement est monté du côté du bâti attelé tandis que le second carter est monté du côté du bâti d'attelage.

### Brève description des dessins

D'autres caractéristiques, détails et avantages apparaîtront à la lecture de la description détaillée ci-après, et à l'analyse des dessins annexés, sur lesquels :
**Fig. 1**

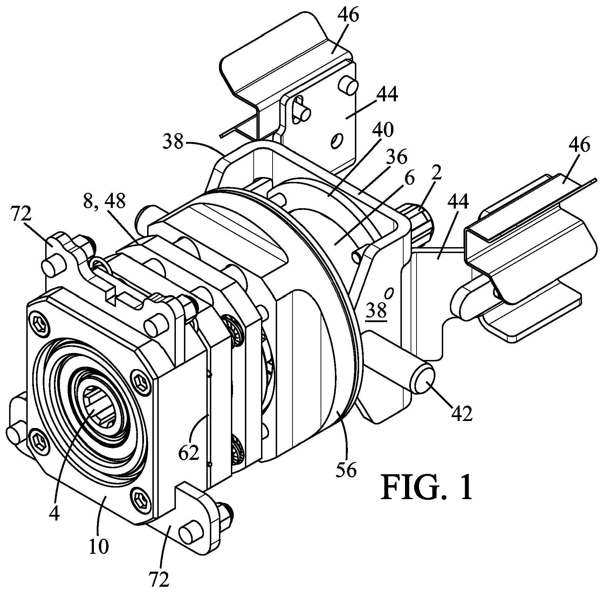

   [Fig. 1] montre en perspective un dispositif d'accouplement de deux arbres.
**Fig. 2**

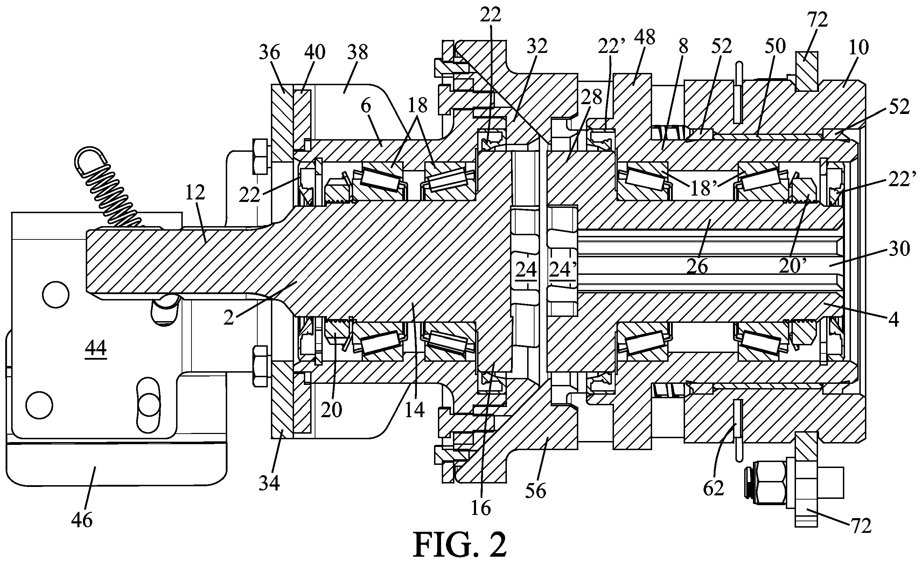

   [Fig. 2] est une vue en coupe longitudinale selon la ligne de coupe II-II du dispositif d'accouplement dans une première position.
**Fig. 3**

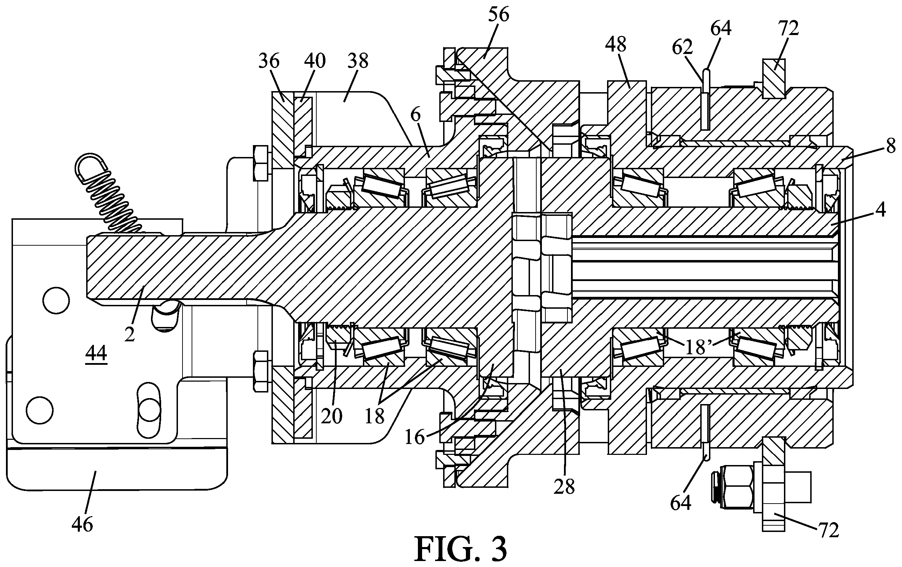

   [Fig. 3] est une vue en coupe longitudinale selon la ligne de coupe II-II du dispositif d'accouplement dans une deuxième position.
**Fig. 4**

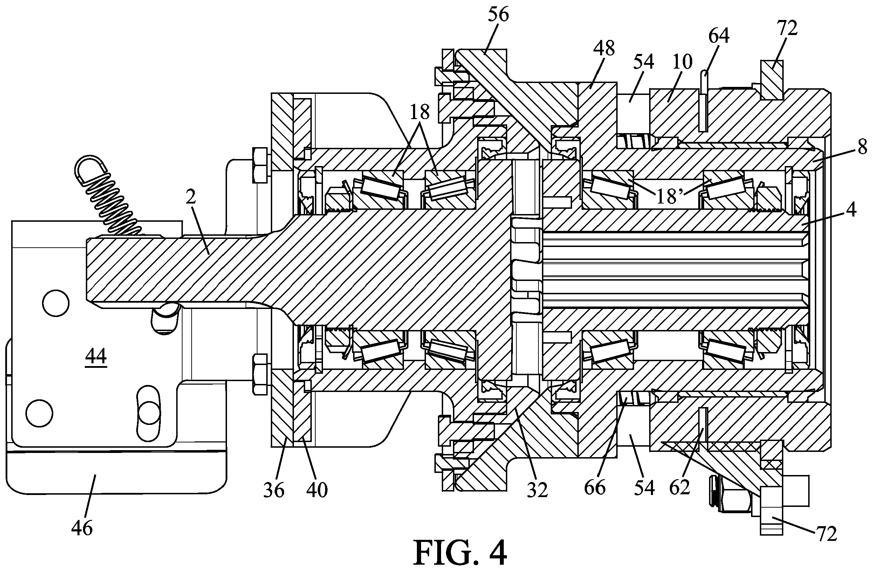

   [Fig. 4] est une vue en coupe longitudinale selon la ligne de coupe II-II du dispositif d'accouplement dans une troisième position.
**Fig. 5**

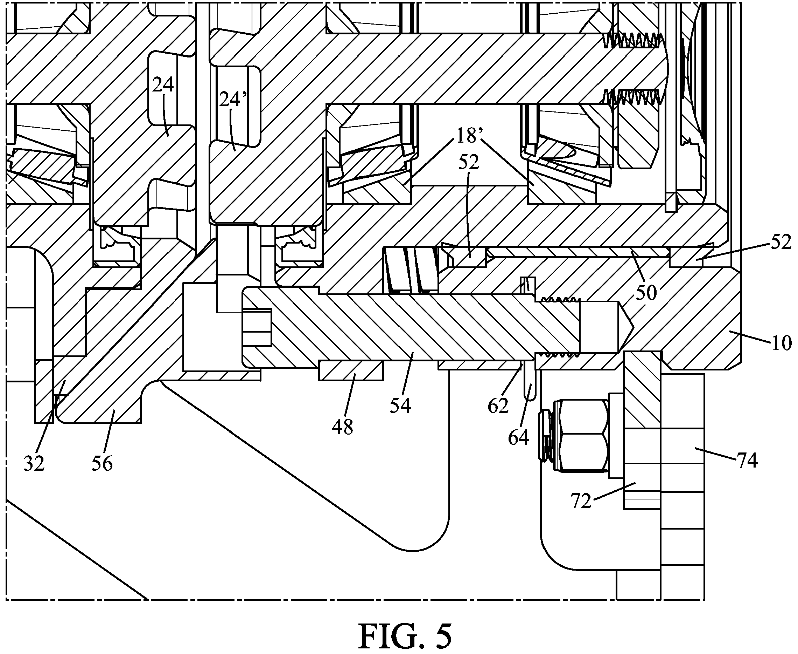

   [Fig. 5] est une vue en coupe de détail dans la première position de la figure 2.
**Fig. 6**

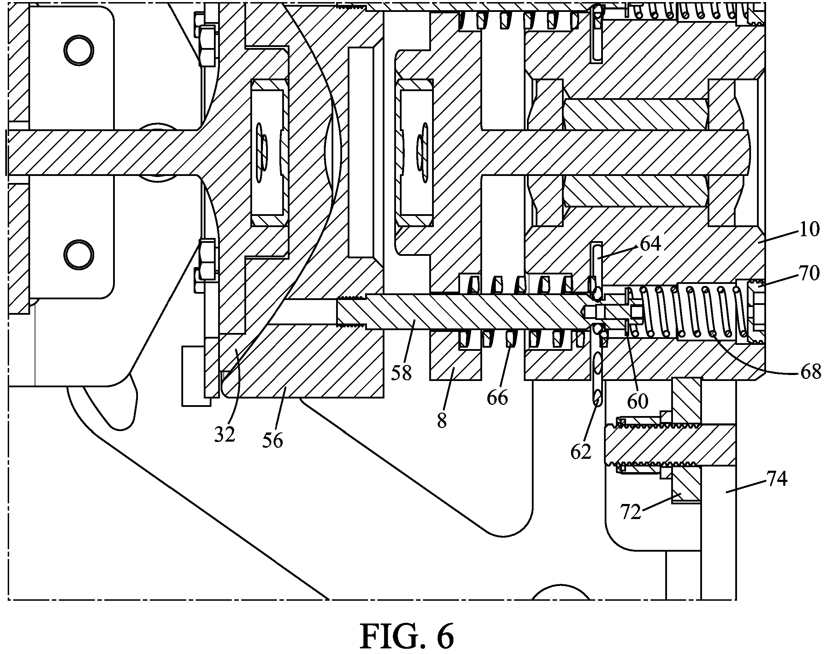

   [Fig. 6] est une autre vue en coupe de détail dans la première position de la figure 2.
**Fig. 7**

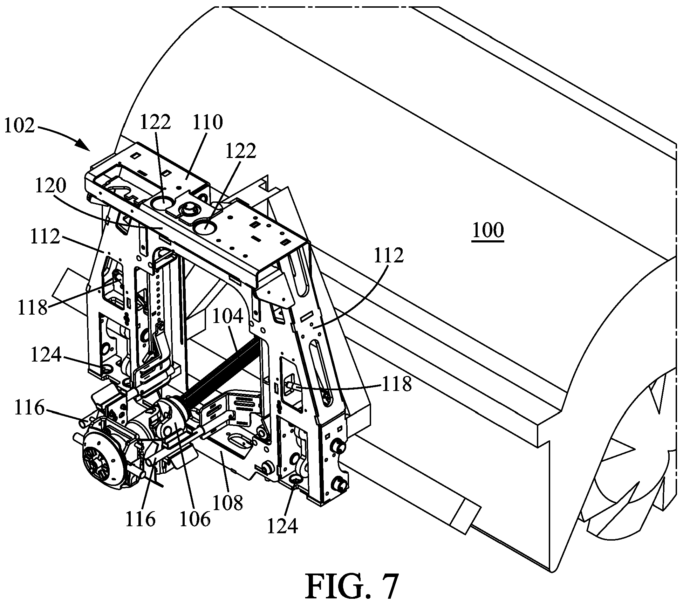

   [Fig. 7] montre schématiquement un outil agricole muni d'un bâti attelé et d'une partie d'un dispositif d'accouplement de la figure 1.
**Fig. 8**

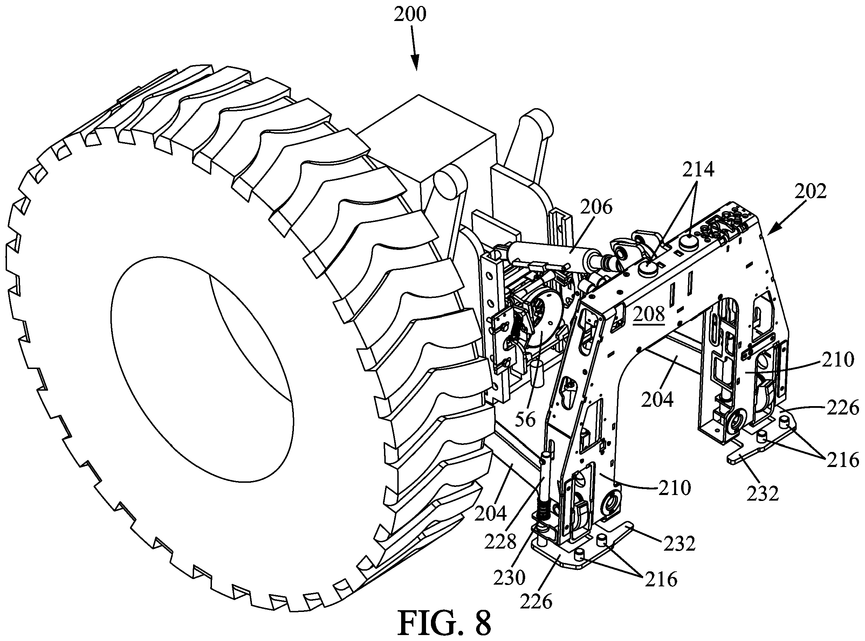

   [Fig. 8] montre schématiquement une partie arrière de tracteur agricole munie d'un bâti d'attelage et d'une partie d'un dispositif d'accouplement de la figure 1.
**Fig. 9**

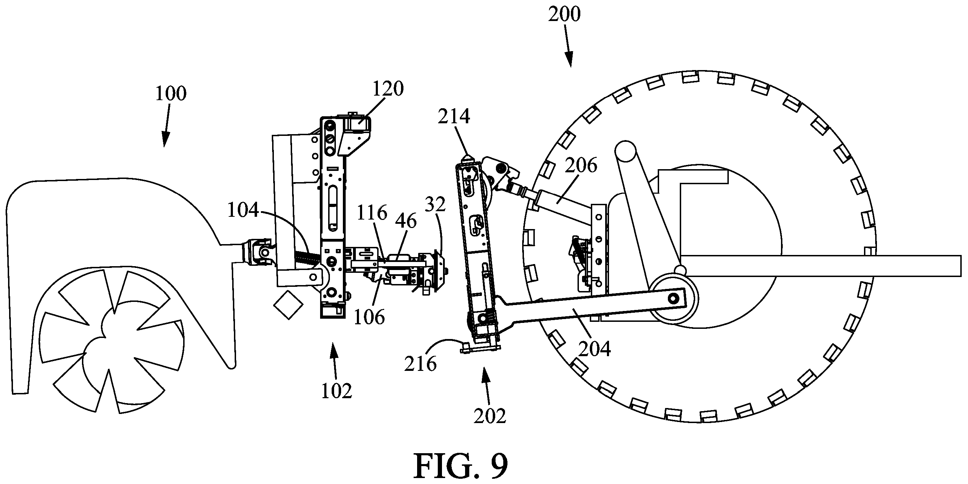

   [Fig. 9] montre en vue de côté la partie arrière de tracteur agricole de la figure 8 face à l'outil agricole de la figure 7 avant attelage.
**Fig. 10**

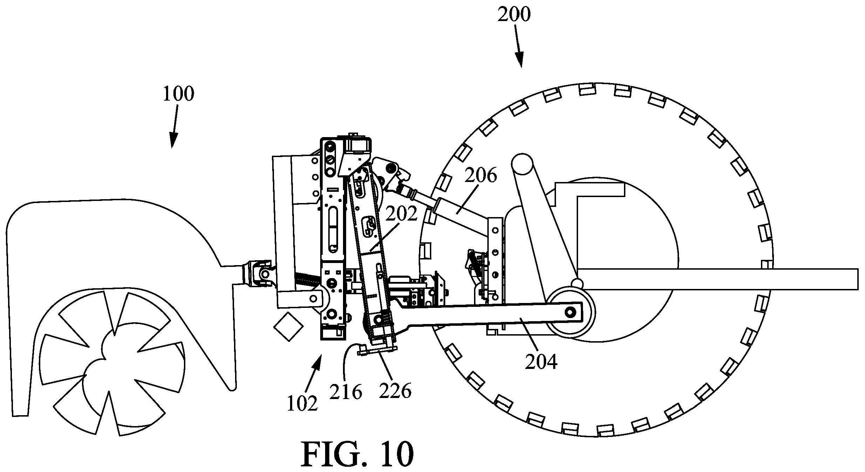

   [Fig. 10] montre une première étape d'attelage de l'outil de la figure 7 à la partie arrière du tracteur de la figure 8.
**Fig. 11**

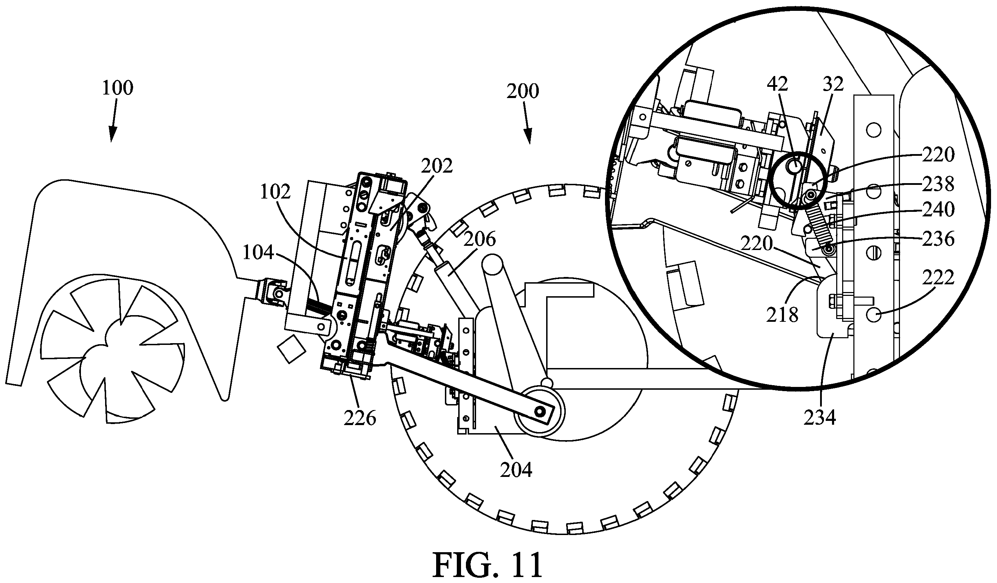

   [Fig. 11] montre une deuxième étape d'attelage de l'outil de la figure 7 à la partie arrière du tracteur de la figure 8 avec une vue de détail d'une partie du dispositif d'accouplement.
**Fig. 12**

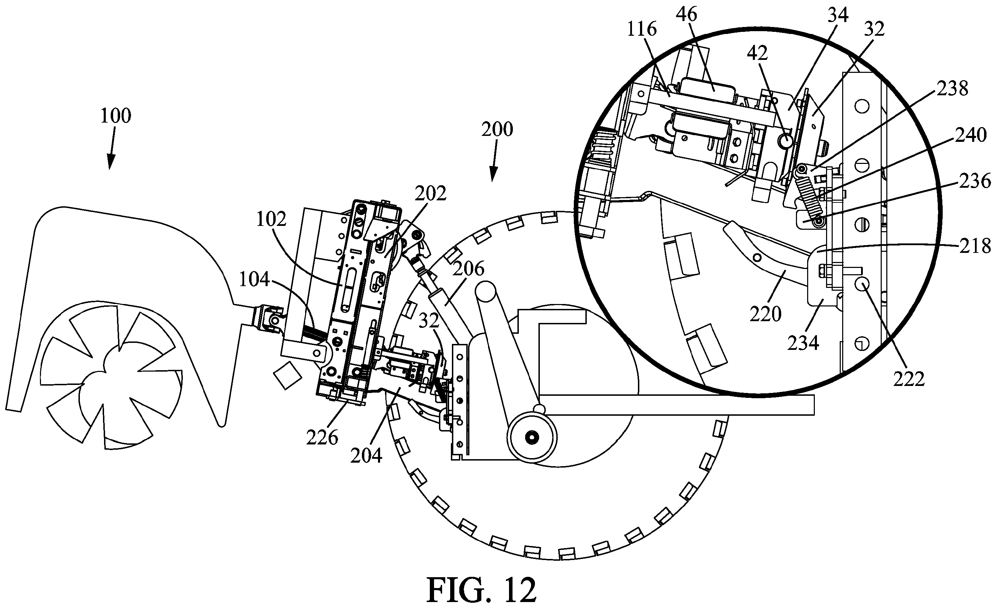

   [Fig. 12] montre une troisième étape d'attelage de l'outil de la figure 7 à la partie arrière du tracteur de la figure 8 avec une vue de détail d'une partie du dispositif d'accouplement.
**Fig. 13**

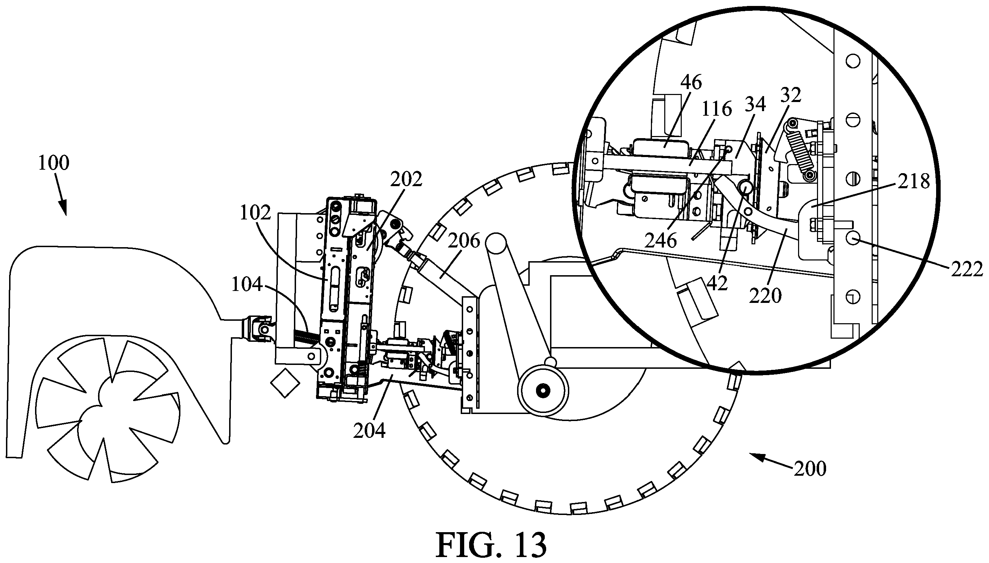

   [Fig. 13] montre une quatrième étape d'attelage de l'outil de la figure 7 attelé à la partie arrière du tracteur de la figure 8 avec une vue de détail d'une partie du dispositif d'accouplement.
**Fig. 14**

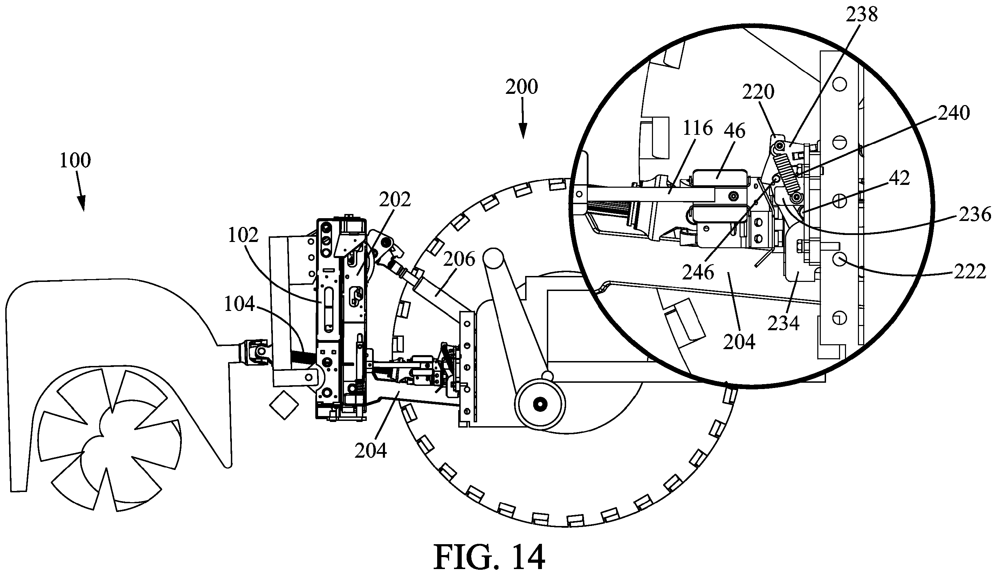

   [Fig. 14] montre une cinquième étape d'attelage de l'outil de la figure 7 à la partie arrière du tracteur de la figure 8 avec une vue de détail d'une partie du dispositif d'accouplement.
**Fig. 15**

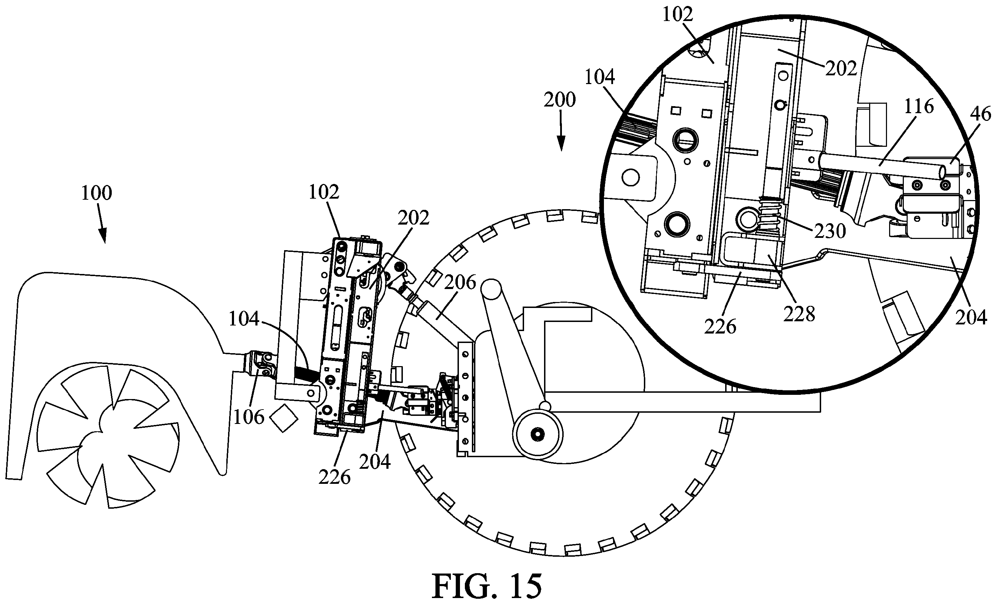

   [Fig. 15] montre l'outil de la figure 7 en position attelée à la partie arrière du tracteur de la figure 8 avec une vue de détail d'un partie du dispositif d'accouplement.
**Fig. 16**

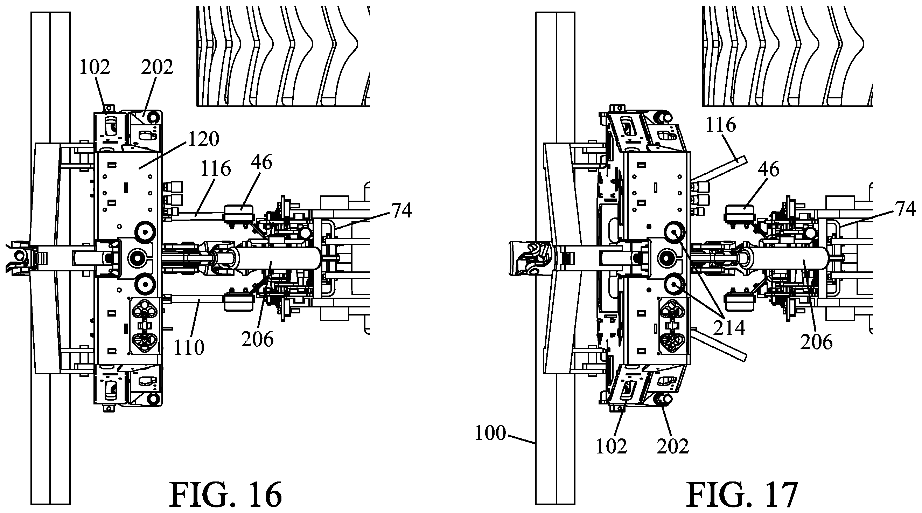

   [Fig. 16] est une vue de dessus correspondant à la figure 14.
**Fig. 17**
   [Fig. 17] est une vue de dessus correspondant à la figure 15.
**Fig. 18**

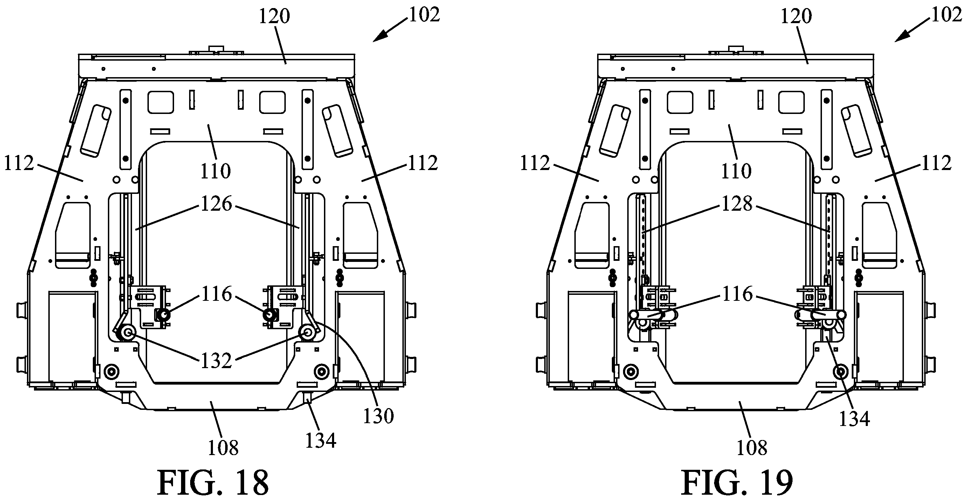

   [Fig. 18] est une vue en élévation d'un bâti côté outil correspondant à la figure 14.
**Fig. 19**
   [Fig. 19] est une vue en élévation du bâti attelé de la figure 18 dans sa position correspondant à la figure 15.
**Fig. 20**

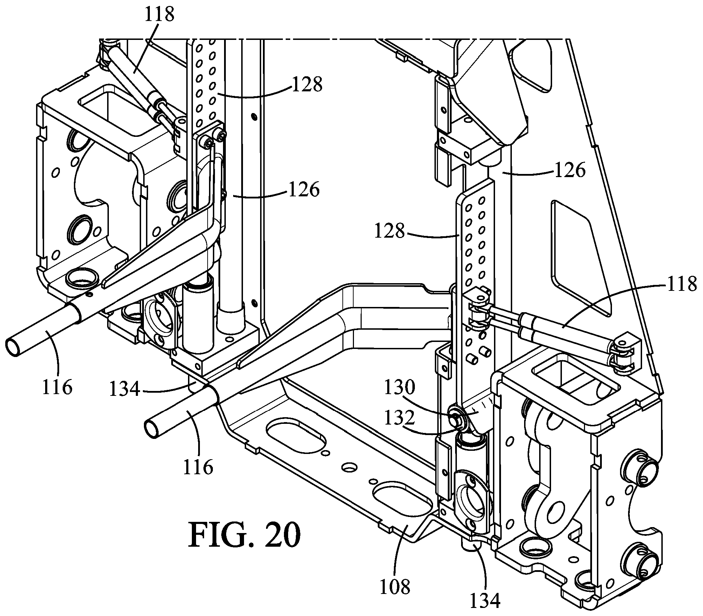

   [Fig. 20] est une vue en perspective d'un détail du bâti attelé à échelle agrandie.
**Fig. 21**

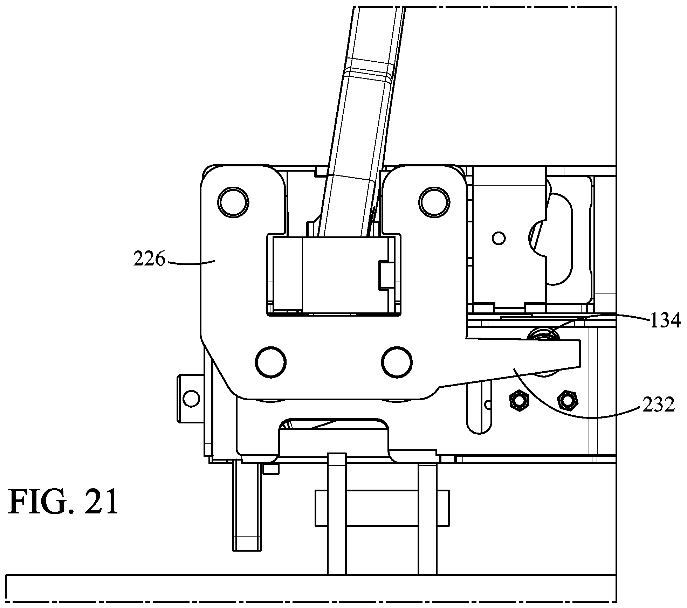

   [Fig. 21] est une vue de dessous de détail à échelle agrandie des deux bâtis assemblés.
**Fig. 22**

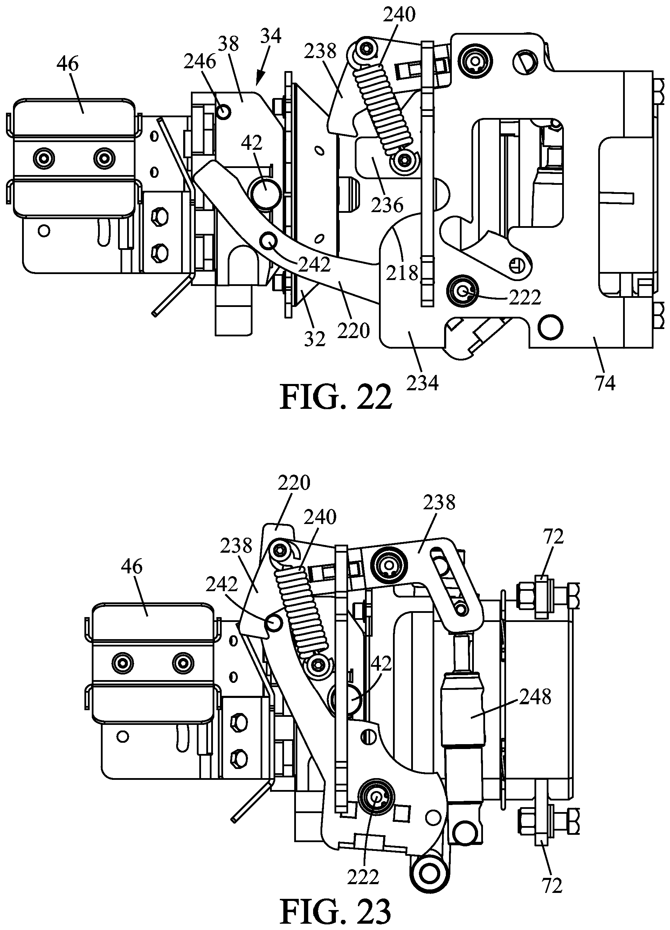

   [Fig. 22] est une vue de côté du dispositif d'accouplement de la figure 1 monté sur un support et muni d'un dispositif de verrouillage en position ouverte.
**Fig. 23**
   [Fig. 23] est une vue similaire à la figure 22 avec le dispositif de verrouillage en position fermée sans le support.
**Fig. 24**

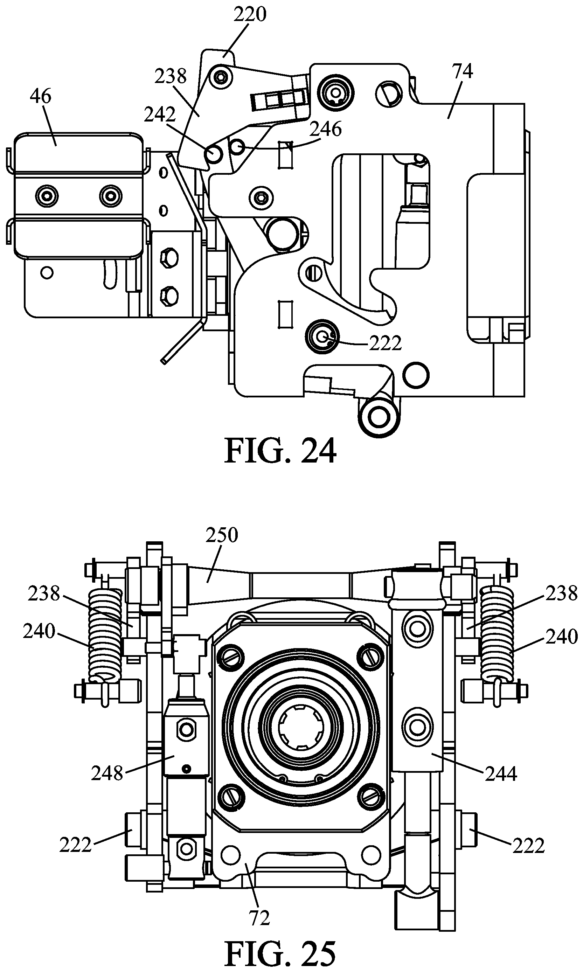

   [Fig. 24] est une vue similaire à la figure 23 avec le support mais avec retrait d'un ressort.
**Fig. 25**
   [Fig. 25] est une vue arrière d'une partie du dispositif d'accouplement illustré sur les figures 22 à 24.

### Description des modes de réalisation

Le dessin joint et la description ci-après contiennent, pour l'essentiel, des éléments de caractère certain. Ils pourront donc non seulement servir à mieux faire comprendre la présente divulgation mais aussi contribuer à sa définition, le cas échéant.

Il est maintenant fait référence à la figure 1. Elle représente un dispositif permettant de réaliser l'accouplement de deux arbres. On suppose ici que les deux arbres à accoupler sont des arbres cannelés, qu'un arbre présente une extrémité mâle tandis que l'autre présente une extrémité femelle. Le dispositif illustré sur la figure 1 comporte alors une pièce d'accouplement mâle 2 (pour recevoir l'extrémité d'arbre femelle) ainsi qu'une pièce d'accouplement femelle 4 (pour coopérer avec l'extrémité d'arbre mâle). L'homme du métier comprendra à la lecture de la description qui suit que le dispositif d'accouplement décrit peut aussi accoupler deux arbres présentant chacun une extrémité mâle ou deux arbres avec des extrémités femelles.

La pièce d'accouplement mâle 2 est montée par l'intermédiaire de roulements dans un premier carter 6 tandis que la pièce d'accouplement femelle 4 est montée par l'intermédiaire de roulements dans un palier intermédiaire 8, lui-même monté coulissant dans un second carter 10 distinct du premier carter 6. Cette structure sera mieux comprise en lien avec les figures 2, 3 et 4 qui montrent le dispositif de la figure 1 en coupe longitudinale.

On considère dans la suite de la description que la direction longitudinale est la direction donnée par les arbres accouplés et donc aussi ici par la pièce d'accouplement femelle 2 et la pièce d'accouplement mâle 4.

La pièce d'accouplement mâle 2 présente une extrémité de connexion 12, un corps cylindrique plein 14 et une première tête à crabot 16.

L'extrémité de connexion 12 est de forme adaptée à une extrémité d'arbre à accoupler. Elle est ici destinée à coopérer avec un logement femelle (non représenté). Dans la forme de réalisation illustrée à titre d'exemple non limitatif, l'extrémité de connexion 12 se présente sous la forme d'un arbre cannelé. Cette extrémité se prolonge par le corps cylindrique plein 14. Ce dernier est destiné à porter une paire de roulements 18 et sa surface extérieure périphérique est usinée pour recevoir ces roulements 18. Cette surface n'est pas décrite en détail. Elle comporte toutefois par exemple une butée pour un roulement, une surface usinée servant de siège aux roulements 18, une partie filetée pour recevoir un écrou 20 ainsi qu'une zone destinée à coopérer avec un joint d'étanchéité 22 pour protéger les roulements 18.

La première tête à crabot 16 peut ne former qu'une seule pièce avec le corps cylindrique plein 14 et l'extrémité de connexion 12. Cette pièce est obtenue dans l'exemple illustré par usinage. La première tête à crabot 16 forme l'extrémité de cette pièce opposée à l'extrémité de connexion 12. Elle est de plus grand diamètre que le corps cylindrique plein 14. Elle présente une face transversale de laquelle font saillie des dents 24 régulièrement disposées à la périphérie de cette face transversale.

La pièce d'accouplement femelle 4 présente quant à elle un corps cylindrique tubulaire 26 et une seconde tête à crabot 28. La première tête à crabot 16 et la seconde tête à crabot 28 forment ensemble un dispositif de crabotage, c'est-à-dire un dispositif d'accouplement direct de deux pièces, ou crabots, par dents et rainures.

Le corps cylindrique tubulaire 26 présente un logement 30 adapté à recevoir une extrémité d'arbre à accoupler. Bien entendu, il convient donc d'adapter la forme du logement 30 à la forme de l'arbre. Dans la forme de réalisation illustrée, le logement 30 est un logement pour recevoir un arbre cannelé (non représenté). La surface extérieure de ce corps cylindrique tubulaire est usinée pour recevoir une paire de roulements 18'. Cette surface n'est pas décrite en détail. Elle comporte toutefois par exemple une butée pour un roulement, une surface usinée servant de siège aux roulements 18', une partie filetée pour recevoir un écrou 20' et une zone pour recevoir un joint d'étanchéité 22' afin de protéger les roulements 18'.

La seconde tête à crabot 28 est adaptée pour coopérer avec la première tête à crabot 16. Le diamètre de cette seconde tête à crabot 28 correspond au diamètre de la première tête à crabot 16. Cette seconde tête à crabot 28 présente elle aussi une face transversale de laquelle font saillie des dents 24'. Ces dernières sont destinées à engrener avec les dents 24 de la première tête à crabot 28.

Le premier carter 6 est une pièce tubulaire dont la surface intérieure est usinée pour recevoir les bagues extérieures des roulements 18. Le logement formé à l'intérieur de ce premier carter 6 pour recevoir les roulements 18 est fermé à une extrémité par le joint d'étanchéité 22. Du côté opposé à ce joint, c'est-à-dire du côté de la première tête à crabot, un joint d'étanchéité 22 est également prévu entre la première tête à crabot 16 et le premier carter 6.

Du côté de la première tête à crabot 16, le premier carter 6 porte un premier anneau de centrage 32 qui, dans la forme de réalisation proposée sur le dessin, est une pièce distincte du premier carter 6 et est assemblée par vissage sur un flasque prévu à cet effet sur le premier carter 6 du côté de la première tête à crabot 16. Ce premier anneau de centrage 32 présente une surface extérieure tronconique qui est coaxiale avec le premier carter 6 et la pièce d'accouplement mâle 2.

Du côté opposé à la première tête à crabot 16, le premier carter 6 est muni de moyens de fixation à un support 34. Ce dernier est réalisé en plusieurs pièces. Dans la forme de réalisation illustrée, le support 34 comporte une pièce en forme d'étrier avec une base 36 et deux branches 38. La base 36 s'étend transversalement par rapport à la pièce d'accouplement mâle 2 et sert à la fixation du support 34 sur le premier carter 6. Une bride 40 montée sur le premier carter 6 est utilisée pour assurer la fixation du support 34, plus précisément de la base 36, sur le premier carter 6. Les branches 38 de la pièce en forme d'étrier s'étendent perpendiculairement à la base en direction de la première tête à crabot 16. Chaque branche 38 porte un doigt 42 qui s'étend à partir de la branche 38 vers l'extérieur de l'étrier, c'est-à-dire en s'éloignant du premier carter 6. Les deux doigts 42 sont disposés sur les branches 38 de manière à être coaxiales (et elles s'étendent donc transversalement par rapport à la pièce d'accouplement mâle 2). Chaque branche 38 porte en outre une pièce de fixation latérale 44 qui s'étend longitudinalement vers l'extérieur, en s'éloignant du premier carter 6. Ces pièces de fixation latérale 44 sont adaptées à l'outil sur lequel le support 34 et la pièce d'accouplement mâle 2 correspondante doivent être montés. Dans la forme de réalisation illustrée à titre d'exemple illustratif non limitatif, les pièces de fixation latérale 44 présentent chacune une platine de fixation sur la face extérieure de laquelle est fixée une pièce profilée 46 en U, les bords libres des branches du U étant évasés et la pièce profilée 46 étant orientée longitudinalement.

Comme mentionné plus haut, la pièce d'accouplement femelle 4 est disposée dans le palier intermédiaire 8, lui-même monté mobile en translation longitudinale dans le second carter 10 supposé fixe.

Le palier intermédiaire 8 est une pièce tubulaire dont la surface intérieure est usinée pour recevoir les bagues extérieures des roulements 18' dans lesquels est montée la pièce d'accouplement femelle 4. Le logement formé à l'intérieur de ce palier intermédiaire 8 pour recevoir les roulements 18' est fermé à une extrémité par le joint d'étanchéité 22'. Du côté opposé à ce joint, c'est-à-dire du côté de la seconde tête à crabot 28, un autre joint d'étanchéité 22' est également prévu entre la seconde tête à crabot 28 et le palier intermédiaire 8.

Le palier intermédiaire 8 comporte en outre un flasque 48, du côté de la seconde tête à crabot 28. Ce flasque 48 porte le joint d'étanchéité 22'. Il peut être en outre muni d'alésages longitudinaux prévus pour permettre son guidage par rapport au second carter 10 ainsi que d'alésages longitudinaux pour le passage de tiges de guidage comme expliqué plus loin en référence notamment aux figures 5 et 6.

Le second carter 10 est supposé être fixe dans la présente description. Il sert ainsi de référence pour les mouvements relatifs des différentes pièces qui seront expliqués par la suite. Le second carter 10 présente une forme globalement parallélépipédique avec un alésage central longitudinal traversant dans lequel vient coulisser l'ensemble mobile formé par la pièce d'accouplement femelle 4 et le palier intermédiaire 8. À la périphérie de cet alésage central, se trouvent, d'une part, des trous borgnes longitudinaux et, d'autre part, des alésages traversants longitudinaux. Dans la forme de réalisation illustrée, quatre trous borgnes et quatre alésages traversants sont prévus. Les quatre trous borgnes sont similaires, avec un taraudage en fond de trou, disposés longitudinalement et débouchent dans la même face, dite face arrière, du second carter 10.

Comme déjà évoqué, la pièce d'accouplement femelle 4 et le palier intermédiaire 8 forment un ensemble mobile par rapport au second carter 10. Ce guidage est réalisé par l'alésage central du second carter 10. Dans la forme de réalisation illustrée à titre d'exemple non limitatif, un coussinet 50 disposé entre deux joints racleurs 52 est prévu entre la face extérieure du palier intermédiaire et la surface intérieure de l'alésage central du second carter 10.

Pour le guidage de l'ensemble mobile, pour éviter notamment une rotation de cet ensemble mobile par rapport au second carter 10, quatre premières tiges de guidage 54 sont prévues. En référence à la figure 5 qui est une vue en coupe à échelle agrandie du dispositif d'accouplement dans la première position de la figure 2 mais dans un plan de coupe longitudinal passant par une première tige de guidage 54. Cette dernière se présente sous la forme d'une vis avec une tête, un corps et une extrémité filetée opposée à la tête de la vis. L'extrémité filetée de chaque première tige de guidage 54 est vissée dans un trou borgne du second carter 10. Le corps de chaque première tige de guidage 54 forme une colonne de guidage pour le flasque 48 du palier intermédiaire 8. La tête de vis de chaque première tige de guidage 54 forme un épaulement servant de butée pour le flasque 48 comme illustré sur la figure 5. Le flasque 48 se trouvant entre les têtes de vis et la face arrière du second carter 10, c'est-à-dire la face dans laquelle débouchent les trous borgnes, la course maximale de l'ensemble mobile est définie par la distance séparant la tête de vis de chaque première tige de guidage 54 de la face arrière du second carter 10, diminuée de l'épaisseur du flasque 48.

Le second carter 10 porte aussi un second anneau de centrage 56 destiné à coopérer avec le premier anneau de centrage 32. Alors que le premier anneau de centrage 32 présente une surface conique extérieure, le second anneau de centrage 56 comporte quant à lui une surface conique intérieure. Ces deux surfaces coniques, plus précisément tronconiques, présentent un même angle au sommet pour pouvoir venir l'une au contact de l'autre en venant épouser la forme de l'autre.

Le second anneau de centrage 56 est muni de secondes tiges de guidage 58 illustrées notamment sur la figure 6. Dans la forme de réalisation illustrée, quatre secondes tiges de guidage 58 similaires sont prévues.

Chaque seconde tige de guidage 58 présente une extrémité filetée qui vient coopérer avec un trou taraudé réalisé dans le second anneau de centrage 56 pour solidariser la seconde tige de guidage 58 avec le second anneau de centrage 56. Pour le bon positionnement relatif de la seconde tige de guidage 58 avec le second anneau de centrage 56, un épaulement de la seconde tige de guidage 58 vient coopérer avec un épaulement réalisé dans le trou taraudé correspondant.

Chaque seconde tige de guidage 58 comporte ensuite un corps cylindrique circulaire qui traverse le flasque 48 du palier intermédiaire 8 au niveau d'un alésage prévu à cet effet et qui pénètre un alésage traversant du second carter 10. Un rétrécissement prolonge le corps cylindrique jusqu'à une zone de diamètre rétréci. Cette dernière est suivie d'un épaulement puis l'extrémité de la seconde tige de guidage 58 retrouve un diamètre correspondant à celui de son corps cylindrique. L'extrémité de la seconde tige de guidage 58 est munie d'un trou taraudé central qui reçoit une vis venant maintenir une rondelle d'appui 60.

Sur la figure 2 (et sur la figure 6), on remarque que le second carter 10 peut présenter une fente 62 au niveau de la zone de diamètre rétréci de la seconde tige de guidage 58. Cette fente 62 est alors utilisée pour permettre par exemple de venir introduire sur la seconde tige de guidage 58 une goupille bêta 64. Une goupille bêta est une goupille qui présente deux branches élastiques précontraintes l'une contre l'autre. Une branche est généralement sensiblement rectiligne tandis que l'autre branche présente par rapport à la première branche un espace concave entre deux espaces convexes. Une telle goupille bêta est alors prévue pour que la première branche vienne se loger dans un trou transversal d'un axe tandis que l'espace concave vient alors en appui sur une partie extérieure de l'axe. Dans le dispositif d'accouplement décrit ici, on prévoit qu'une branche de la goupille bêta passe d'un côté de la seconde tige de guidage 58 et que l'autre branche passe de l'autre côté de cette tige, cette dernière se trouvant au niveau de l'espace concave situé entre deux espaces convexes de la goupille.

On remarque en outre sur la figure 6 la présence de ressorts. De premiers ressorts 66 peuvent être des ressorts hélicoïdaux disposés autour du corps cylindrique des secondes tiges de guidage 58. Ces premiers ressorts 66 sont ainsi maintenus et guidés par ces tiges et ils sont disposés entre le flasque 48 du palier intermédiaire 8 (mobile) et le second carter 10 (fixe). Ces premiers ressorts 66 tendent à éloigner le flasque 48 du palier intermédiaire 8 de la face arrière du second carter 10, c'est-à-dire à faire sortir le palier intermédiaire 8 -et la pièce d'accouplement femelle 4- de l'alésage central du second carter 10. De seconds ressorts 68 peuvent être logés dans les alésages du second carter 10. Ces seconds ressorts 68 sont montés chacun entre un bouchon d'arrêt 70 et une rondelle d'appui 60 montée à l'extrémité d'une seconde tige de guidage 58. Ces seconds ressorts 68 tendent à faire sortir les secondes tiges de guidage 58 hors de leur alésage et donc d'éloigner le second anneau de centrage 56 du second carter 10.

Concernant le second carter 10, il peut présenter en outre, comme illustré au dessin, deux rainures transversales réalisées sur deux faces opposées de manière à chacune recevoir une demie-bride 72 de fixation sur un support 74 (visible sur les figures 5, 6 et 16, 17).

Le fonctionnement de ce dispositif d'accouplement de deux arbres est expliqué en référence aux figures 2 à 4.

À partir d'une position telle qu'illustrée sur la figure 9, sur laquelle la pièce d'accouplement mâle 2 est éloignée de la pièce d'accouplement femelle 4, ces deux pièces d'accouplement sont rapprochées l'une de l'autre : on suppose ici que le second carter 10 est fixe et donc que dans un premier temps (entre la position de la figure 9 et celle de la figure 2), l'ensemble mobile comportant la pièce d'accouplement femelle 4 et le palier intermédiaire 8 ainsi que le second anneau de centrage 56 sont immobiles.

Quand le premier anneau de centrage 32 vient au contact du second anneau de centrage 56, de manière connue un alignement des deux anneaux se réalise. On vient ainsi aligner aussi la pièce d'accouplement mâle 2 avec la pièce d'accouplement femelle 4. Lorsque l'alignement est réalisé (première étape illustrée sur la figure 2), la première tête à crabot 16 est encore à distance de la seconde tête à crabot 28. Pour réaliser l'accouplement des deux arbres, il faut venir faire engrener les deux têtes à crabot.

Une deuxième étape (figure 3) est la mise en contact de la première tête à crabot 16 avec la seconde tête à crabot 28. Pour que la première tête à crabot 16 puisse se rapprocher de la seconde tête à crabot 28, il faut que le second anneau de centrage 56 se rapproche du second carter 10. Ce déplacement est empêché dans le mode de réalisation illustré par les goupilles bêta 64 disposées sur les secondes tiges de guidage 58. Toutefois, les goupilles bêta 64 sont élastiques et lorsqu'une contrainte est exercée sur les secondes tiges de guidage 58, les branches des goupilles bêta 64 s'écartent et les goupilles bêta 64 viennent glisser sur le rétrécissement des secondes tiges de guidage 58 pour venir prendre place sur le corps cylindrique des secondes tiges de guidage 58.

La force à exercer sur le second anneau de centrage 56 par le premier anneau de centrage 32 pour obtenir un déplacement de ces deux anneaux vers le second carter 10 dépend de la raideur des goupilles bêta 64 et de la géométrie des secondes tiges de guidage 58, notamment diamètres et pente au niveau du rétrécissement. Cette force peut donc être adaptée lors de la conception du dispositif en fonction du cahier des charges. La résistance s'opposant au déplacement du second anneau de centrage 56 pourrait être réalisée par d'autres moyens que ceux décrits (avec notamment les goupilles bêta) à l'aide par exemple d'un vérin hydraulique ou autre. Le fait de devoir exercer une force minimale prédéterminée pour obtenir le déplacement du second anneau de centrage 56 (avec le premier anneau de centrage 32) permet de d'abord venir aligner correctement les arbres en alignant la pièce d'accouplement mâle 2 avec la pièce d'accouplement femelle 4 avant de mettre au contact les têtes à crabot.

Quand la première tête à crabot 16 vient contre la seconde tête à crabot 28, un effort correspondant sensiblement à l'effort exercé sur le second anneau de centrage pour le déplacer vient aussi s'exercer sur l'ensemble mobile formé par le palier intermédiaire 8 et la pièce d'accouplement femelle 4 qui porte la seconde tête à crabot 28. L'ensemble mobile rentre alors dans l'alésage central du second carter 10 en venant comprimer les premiers ressorts 66. Ces derniers sont alors comprimés proportionnellement à l'effort axial auquel ils sont soumis, la course de cet ensemble mobile étant limitée lorsque le flasque 48 du palier intermédiaire 8 vient en butée contre le second carter 10.

Il y a peu de chances que les dents des crabots soient juste bien face à face et engrènent directement lorsque le système passe de la deuxième position illustrée sur la figure 2 à la troisième position de la figure 3. Il convient alors de faire tourner un arbre pour amener les dents des crabots à engrener les unes avec les autres. On suppose par exemple que l'arbre moteur est celui dont l'extrémité est montée dans la pièce d'accouplement femelle 4. Cette dernière pièce est alors mise en rotation. Par l'intermédiaire des roulements 18', la pièce d'accouplement femelle 4 vient tourner dans le palier intermédiaire 8, entrainant alors la seconde tête à crabot 28. Les dents 24' de cette dernière viennent alors engrener avec les dents 24 de la première tête à crabot 16 (figure 4). En effet, sous l'effet des premiers ressorts 66 l'ensemble mobile incluant le palier mobile 8 et la pièce d'accouplement femelle 4 est poussé vers la pièce d'accouplement mâle 2. Parallèlement, les seconds ressorts 68 viennent appuyer sur les rondelles d'appui 60 et exercent une contrainte sur les secondes tiges de guidage 58 de telle sorte que le second anneau de centrage 56 reste au contact du premier anneau de centrage 32.

Dans la position illustrée sur la figure 4 l'arbre moteur dont l'extrémité est montée dans la pièce d'accouplement femelle 4 vient entrainer la pièce d'accouplement femelle 4 qui tourne dans le palier intermédiaire 8 et entraine par les têtes à crabot la pièce d'accouplement mâle 2 qui est montée dans une extrémité d'un arbre qui se trouve ainsi entrainé en rotation. Sous l'effet notamment de la contrainte exercée par les premiers ressorts 66, la liaison entre les crabots est maintenue.

Les figures 7 à 17 illustrent l'intégration de ce système dans un dispositif d'attelage, et plus précisément à titre d'exemple illustratif non limitatif, dans un dispositif d'attelage d'un outil agricole à un tracteur agricole.

La figure 7 illustre un outil agricole 100 muni d'un bâti attelé 102 et d'un arbre d'entrainement 104 muni d'un cardan 106.

L'outil agricole 100 peut être de tout type et n'est pas détaillé ici.

Le bâti attelé 102 comporte une traverse inférieure 108, une traverse supérieure 110 et deux montants 112 reliant la traverse inférieure 108 à la traverse supérieure 110.

D'un côté du cardan 106 se trouve l'arbre d'entrainement 104 qui fait partie de l'outil agricole et prévu par son constructeur pour l'entrainement de l'outil. De l'autre côté du cardan 106, se trouve une douille 114 qui est adaptée pour coopérer avec la pièce d'accouplement mâle 2.

On remarque sur la figure 7 la présence de deux bras supports 116 qui portent une partie du dispositif d'accouplement, et plus précisément la partie de ce dispositif comportant notamment le premier carter 6 et la pièce d'accouplement mâle 2. Ces bras supports 116 présentent des extrémités libres en forme de tige qui viennent coopérer avec les pièces profilées 46. Ces bras supports 116 sont chacun montés pivotants autour d'un axe 126 (figure 20) s'étendant entre la traverse inférieure 108 et la traverse supérieure 110. À chaque fois des moyens élastiques, tels par exemple dans la forme de réalisation illustrée, des ressorts à gaz 118 sont prévus pour précontraindre ces bras supports 116 dans une position (figures 7, 16 et 18) dans laquelle les extrémités des bras supports 116 coopèrent avec les pièces profilées 46 pour maintenir en position une partie du dispositif d'accouplement. Comme il sera expliqué plus loin en relation avec la figure 20, ces bras supports 116 peuvent également venir s'ouvrir dans une position dans laquelle les extrémités libres de ces bras supports 116 sont écartées du dispositif d'accouplement.

La figure 8 montre schématiquement une partie arrière d'un tracteur agricole 200 avec un système de relevage trois points comportant de manière classique deux bras inférieurs 204 et un bras supérieur 206 de longueur variable (formé ici par un vérin). Ce système de relevage trois points porte ici le bâti d'attelage 202 en forme de U inversé avec une base 208 se trouvant en position supérieure et deux jambes 210 s'étendant à partir de la base 208 vers le bas. Le bras supérieur 206 (ou vérin) est relié à la base 208, sensiblement au centre de celle-ci, tandis que les bras inférieurs 204 sont chacun reliés à une jambe 210, sensiblement à proximité d'une extrémité libre de la jambe 210 correspondante.

Le second carter 10 est monté à l'aide des deux demie-brides 72 sur son support disposé sur le tracteur de telle sorte qu'un arbre d'entraineur, appelé souvent prise de force, vienne se loger dans la pièce d'accouplement femelle 4.

Le bâti attelé 102 et le bâti d'attelage 202 présentent par exemple tous deux une structure mécanosoudée. Ils sont adaptés pour être solidarisés l'un à l'autre. On remarque notamment que la base 208 (supérieure) du bâti d'attelage 202 se présente sous la forme d'une poutre de section sensiblement carrée qui porte sur sa face opposée aux jambes 210 deux pions de centrage 214. La traverse supérieure 110 du bâti attelé 102 se présente quant à elle sous la forme d'une poutre avec une coiffe 120 qui vient en saillie vers l'avant (c'est-à-dire vers le bâti d'attelage 202) de manière à pouvoir recouvrir la base 208 du bâti d'attelage 202. Des logements cylindriques 122 correspondant aux pions de centrage 214 sont prévus dans la coiffe 120 pour recevoir lesdits pions de centrage 214.

De même, comme on peut le voir sur la figure 8, chaque jambe 210 du bâti d'attelage 202 porte une plaque d'extrémité de laquelle font saillie à chaque fois deux doigts de verrouillage 216. De façon correspondante, le bâti attelé 102 présente au niveau de sa traverse inférieure 108 des trous de verrouillage 124 correspondants. Les deux doigts de verrouillage 216 correspondant à une jambe 210 sont montés sur une platine 226 s'étendant sensiblement perpendiculairement à la jambe 210 correspondante et en saillie vers l'arrière par rapport à cette jambe 210. Cette platine 226 est montée coulissante de manière à pouvoir s'éloigner/se rapprocher de l'extrémité de la jambe 210. Un vérin (caché à l'intérieur de la jambe 210) permet de commander le déplacement de la platine 226 par rapport à la jambe 210 correspondante. La platine 226 est reliée à son vérin de commande par au moins une tige 228 montée coulissante par rapport à la jambe 210 et précontrainte par un ressort 230 dans la position de la platine 226 rapprochée de l'extrémité libre de la jambe 210 correspondante.

La figure 9 montre en vue de côté une partie arrière d'un tracteur agricole muni, d'une part, du bâti d'attelage 202 et, d'autre part, d'une partie du système d'accouplement des figures 1 à 6 montée sur son support. Elle montre aussi un outil agricole schématisé qui est muni, d'une part, du bâti attelé 102 et, d'autre part, de la partie du système d'accouplement des figures 1 à 6 complémentaire de la partie montée sur le tracteur.

Sur la figure 9, l'outil agricole 100 est disposé en vis-à-vis de la partie arrière du tracteur agricole 200 sans aucun contact entre les deux.

Le tracteur agricole 200 étant motorisé, l'outil agricole 100 reste en place et le tracteur agricole 200 recule pour se rapprocher de l'outil agricole 200. Lors de cette manœuvre, le conducteur du tracteur agit sur un système hydraulique du tracteur agricole 200 afin de venir incliner à l'aide du bras supérieur 206 qui est de longueur variable de telle sorte que le bâti d'attelage 202 forme un angle d'une dizaine de degrés avec le bâti attelé 102. Le conducteur manœuvre aussi de telle sorte que la base 208 du bâti d'attelage 202 avec ses pions de centrage 214 vienne sous la coiffe 120 du bâti attelé 102, en centrant sensiblement le bâti d'attelage 202 par rapport au bâti attelé 102. L'outil agricole 100 étant « libre », un centrage s'effectue automatiquement grâce notamment à la forme conique des pions de centrage 214.

La figure 10 montre le bâti d'attelage 202 incliné par rapport au bâti attelé 102, les pions de centrage 214 commençant à pénétrer dans les logements cylindriques 122 correspondants du bâti attelé 102.

Dans cette position, les deux parties du dispositif d'accouplement se sont rapprochées et un espace d'une dizaine à plusieurs dizaines de centimètres les sépare.

À partir de la position illustrée sur la figure 10, dans laquelle l'outil agricole 100 repose sur le sol, le système de relevage trois points est relevé. Il peut amener l'outil agricole 100 à se soulever comme illustré sur la figure 11 mais si l'outil agricole 100 est muni de suspension avec débattement, les roues de l'outil agricole 100 restent au sol et seul le châssis de l'outil agricole 100 est entrainé vers le haut. Au cours de ce mouvement, le bâti attelé 102 vient se plaquer contre le bâti d'attelage et les doigts de verrouillage 216 viennent se placer face aux trous de verrouillage 124 sans rentrer dans ceux-ci.

Dans cette position les deux bâtis sont en position accouplée non verrouillée et la prise de force n'entraine pas encore l'arbre d'entrainement 104 de l'outil agricole 100.

On peut remarquer sur la vue de détail de la figure 11 que le tracteur agricole 200 présente un dispositif de guidage qui peut comporter une plaque latérale de guidage (il peut en comporter une seconde, symétrique à la première par rapport au second carter 10) qui présente un bord supérieur 218 arrondi formant une surface de guidage. Ce bord supérieur 218 est destiné à coopérer avec un doigt 42 qui fait saillie d'un côté du premier carter 6 comme il sera expliqué ci-après. Ce dispositif comporte en outre un bras 220 articulé autour d'un axe transversal 222. Sur la figure 11, le bras 220 est en position relevée et son extrémité est proche du doigt 42 correspondant.

Au-dessus de chaque plaque latérale de guidage 234, peut se trouver un dispositif de verrouillage. Les figures 22 à 25 illustrent un exemple de dispositif de verrouillage. Comme illustré sur les figures 22 à 24, chaque dispositif de verrouillage présente par exemple deux mâchoires disposées chacune sensiblement dans le même plan que la plaque latérale de guidage 234 correspondante, c'est-à-dire dans un plan sensiblement vertical et longitudinal (sensiblement parallèle à un axe longitudinal du tracteur). Une mâchoire inférieure 236 est montée fixe sur la structure du tracteur agricole 200 tandis qu'une mâchoire supérieure 238 est montée articulée. Un logement est défini entre les deux mâchoires. En pivotant, la mâchoire supérieure 238 ouvre et ferme l'accès à ce logement. Un ressort de rappel 240 précontraint la mâchoire supérieure 238 en position fermée et forme ainsi un linguet.

Les bras 220 peuvent être alors actionnés à l'aide chacun d'un vérin de verrouillage 244 (figure 25) pour passer dans leur position abaissée illustrée sur la figure 12. Les deux bras 220 présentent de préférence un axe transversal 222 commun et un seul vérin de verrouillage 244 commande le mouvement des bras 220. Ce vérin de verrouillage 244 est de préférence un vérin double effet.

Dans une forme de réalisation préférée, la plaque latérale de guidage 234 et la mâchoire inférieure 236 sont réalisées directement sur le support 74. Comme on peut le voir sur les figures 16 et 17, ce support 74 peut présenter une forme générale en U, avec une base verticale et deux plaques latérales verticales. Chacune de ces plaques latérales verticales est alors avantageusement découpée de manière à former, d'une part, la plaque latérale de guidage 234 avec son bord supérieur 218 et, d'autre part, la mâchoire inférieure 236.

Il est maintenant envisagé d'aligner les deux parties du dispositif d'accouplement. La partie de l'accouplement liée à l'outil agricole 100 (figures 11 et 12) se trouve en position plus élevée que la partie de l'accouplement liée au tracteur agricole 200. Les bras 220 sont alors amenés vers le bas (figure 12). Toute la partie du dispositif d'accouplement liée à l'outil agricole 100 est alors abaissée en abaissant les deux bâtis (bâti attelé 102 et bâti d'attelage 202) en agissant sur le vérin formant le bras supérieur 206. Dans ce mouvement, la partie de l'accouplement liée à l'outil agricole 100 s'abaisse et les doigts 42 viennent reposer chacun sur le bras 220 correspondant (on ne voit sur les figures qu'un seul bras 220 et un seul doigt 42) comme illustré sur la figure 13.

La vue de la figure 22 correspond sensiblement à la position illustrée sur la figure 13. Les deux parties du dispositif d'accouplement se trouvent en vis-à-vis, à une distance allant de quelques centimètres à quelques dizaines de centimètres.

L'ensemble formé par l'outil agricole 100, le bâti attelé 102 et le bâti d'attelage 202 continue son mouvement de descente à l'aide du vérin formant le bras supérieur 206 tandis qu'en parallèle les bras 220 se relèvent à l'aide du vérin de verrouillage 244. Dans ce dernier mouvement (figure 13 à figure 14), les bras 220 agissent sur les doigts 42 pour rapprocher la partie du dispositif d'accouplement liée à l'outil de la partie du dispositif d'accouplement lié au tracteur. Le bord supérieur 218 de chaque plaque latérale de guidage 234 vient participer au guidage des doigts 42 dans la dernière phase d'approche, avant que la partie du dispositif d'accouplement liée à l'outil ne vienne au contact de la partie d'accouplement liée au tracteur. Le bord supérieur 218 vient guider ainsi le doigt 42 correspondant vers le fond d'un logement qui présente ici la forme d'une encoche formée dans la plaque latérale de guidage 234. Lorsque le doigt 42 arrive dans l'encoche correspondante, le bras 220 vient fermer l'encoche et le doigt est alors prisonnier au fond de l'encoche. La fin de course du doigt 42 n'est pas définie par le fond de l'encoche mais par le contact entre les crabots. Ainsi, progressivement le dispositif d'accouplement arrive dans la position illustrée sur la figure 2 puis le dispositif d'accouplement de deux arbres des figures 1 à 6 passe dans l'ordre dans les positions illustrées sur les figures 2 à 4 et commentées plus haut. De manière habituelle, un arbre d'entrainement d'un outil agricole est de longueur variable. Ainsi, lorsque les bras 220 sont actionnés et coopèrent avec les doigts 42, la partie du dispositif d'accouplement associée à l'outil agricole 100 se déplace vers le tracteur agricole 200. Dans ce mouvement, un guidage est réalisé par le glissement des extrémités des bras supports 116 dans les pièces profilées 46 dans lesquelles elles sont logées. On remarque par comparaison des figures 13 et 14 la différence entre la position relative d'un bras support 116 et sa pièce profilée 46 correspondante. Au cours de ce mouvement, l'arbre moteur du tracteur agricole 200 est mis en rotation pour entrainer la pièce d'accouplement femelle et permettre de finaliser l'accouplement des deux arbres.

Un verrouillage entre les deux parties du dispositif d'accouplement peut être réalisé grâce aux dispositifs de verrouillage. Chaque bras 220 (en théorie, un seul peut suffire) présente un pion de verrouillage 242 destiné à coopérer avec le dispositif de verrouillage correspondant. Ainsi, parallèlement au mouvement illustré sur les figures 2 à 4, chaque pion de verrouillage 242 est guidé vers les mâchoires. Chaque pion de verrouillage 242 est positionné sur le bras 220 correspondant de telle sorte qu'au cours de sa course il vienne en appui sur la mâchoire supérieure 238 correspondante de sorte à venir la déplacer à l'encontre de la précontrainte exercée par le ressort de rappel 240 correspondant. En fin de mouvement, le pion de verrouillage 242 est dans le logement défini entre la mâchoire inférieure 236 et la mâchoire supérieure 238 qui agit comme un linguet grâce à l'action du ressort de rappel 240 et commande la fermeture de l'accès au logement dès que le pion de verrouillage 242 a pris place dans celui-ci.

Pour parfaire le verrouillage décrit ci-dessus, il est prévu de réaliser un blocage supplémentaire pour mieux bloquer un degré de liberté supplémentaire entre la partie du dispositif d'accouplement montée sur le tracteur et celle montée sur l'outil, à savoir un degré de liberté correspondant à une rotation autour d'un axe perpendiculaire au plan des figures, par exemple autour des doigts 42. À cet effet, il est proposé de munir la partie du dispositif d'accouplement côté outil d'au moins un pion anti-rotulage 246. Ce dernierpeut être également maintenu par un bras 220. Dans la forme de réalisation proposée à titre illustratif et non limitatif sur le dessin, un pion anti-rotulage 246 est disposé parallèlement à chaque doigt 42 sur chaque branche 38 du support 34. Il est donc prévu de préférence deux pions anti-rotulage 246 sur le support 34, disposés symétriquement par rapport à un plan médian. Chaque pion anti-rotulage 246 vient alors au contact du bras 220 correspondant dans la position verrouillée du dispositif de verrouillage, comme illustré sur la figure 24. Sur cette dernière figure, le support 74 non représenté sur la figure 23, est présent mais les ressorts de rappel 240 ont été cachés pour montrer un pion anti-rotulage 246 en position verrouillée.

Une fois l'accouplement des arbres réalisé, les deux bâtis sont verrouillés et les bras supports 116 peuvent être pivotés et éloignés du dispositif d'accouplement comme illustré sur la figure 15 montrant le système en position attelée et accouplée. En effet, une fois que les deux arbres sont accouplés et en prise l'un avec l'autre, il n'est plus nécessaire de venir supporter l'arbre du côté de l'outil agricole 100. Il est même préférable de le laisser libre pour qu'il puisse travailler sans contrainte. En outre, le bâti attelé 102 et le bâti d'attelage sont verrouillés en venant faire coopérer les doigts de verrouillage 216 avec les trous de verrouillage 124 correspondant. Une action de chaque vérin 224 permet d'agir sur la platine 226 correspondante et de faire pénétrer les doigts de verrouillage 216 dans les trous de verrouillage 124 correspondants.

La figure 20 illustre un mécanisme permettant de faire pivoter les bras supports 116. Comme indiqué plus haut, ces bras supports 116 sont montés pivotants autour d'un axe 126 qui s'étend sensiblement à la verticale dans une utilisation « normale » du dispositif. Dans la forme de réalisation préférée illustrée ici, les bras supports 116 sont munis d'une platine qui vient se fixer sur une plaque perforée 128 qui est solidaire (par exemple soudée) à l'axe 126, qui s'étend dans un plan contenant l'axe de pivotement du bras support 116 correspondant et qui comporte de nombreux trous de fixation permettant de positionner la platine d'un bras support 116 dans différentes positions par rapport à l'axe 126. Cette dernière caractéristique permet, pour un même bâti attelé, de s'adapter à de nombreux outils agricoles distincts. On remarque que les ressorts à gaz 118 sont reliés à une de leur extrémité à cette plaque perforée 128.

À son extrémité inférieure, la plaque perforée 128 est à chaque fois repliée formant ainsi un plan incliné 130 par rapport au reste de la plaque perforée 128. Sur la figure 20, on remarque au-dessous de ce plan incliné la présence d'une roulette 132. Cette dernière est montée à l'extrémité d'un bras 134 qui traverse la traverse inférieure 108 et fait saillie au-delà de celle-ci. Ce bras 134 est monté parallèlement à l'axe 126. La roulette 132 et le plan incliné sont agencés de telle sorte que lorsque la roulette 132 est poussée (vers le haut) vers la plaque perforée 128 (ou vers la traverse supérieure 110), alors la plaque perforée 128 pivote à l'encontre de la contrainte exercée par les ressorts à gaz 118 de manière à écarter le bras support 116.

Il est prévu avantageusement que l'action d'ouverture des bras supports 116 se réalise en même temps que le verrouillage du bâti attelé 102 sur le bâti d'attelage 202. Pour ce faire, il est proposé à titre illustratif non limitatif que chaque platine 226 portant des doigts de verrouillage 216 présente une excroissance 232. Comme illustré par la figure 21, qui est une vue de dessous et de détail à échelle agrandie des deux bâtis assemblés, cette excroissance 232 vient se positionner sous le bras 134 portant la roulette 132. Ainsi, lorsque le verrouillage du bâti attelé 102 avec le bâti d'attelage 202 est réalisé en venant agir sur la platine 226 pour venir introduire les doigts de verrouillage 216 dans les trous de verrouillage 124, l'excroissance 232 vient agir sur le bras 134 qui, par l'intermédiaire de la roulette 132, agit sur le plan incliné 130 pour ouvrir le bras support 116 correspondant. En cas de problème hydraulique, les ressorts 230 maintiennent la platine 226 dans sa position correspondant au verrouillage des bâtis qui est la position de sécurité.

Les figures 16 à 19 sont des figures complémentaires permettant de mieux comprendre la structure du mécanisme décrit ci-dessus. Les figures 16 et 18 correspondent à la position illustrée sur la figure 14 (bras supports 116 coopérant avec les pièces profilées 46) tandis que les figures 17 et 19 correspondent à la position illustrée sur la figure 15 (bras supports 116 ouverts).

Les figures 16 et 17 sont des vues de dessus. On y voit par exemple le support 74 sur lequel vient se fixer la partie du dispositif d'accouplement liée au tracteur agricole 200. Ce support 74, dans la forme de réalisation illustrée, se présente sous la forme d'une pièce profilée en U avec une base verticale transversale (côté tracteur) qui reçoit les demies-brides 72 et avec deux branches latérales (verticales) qui s'étendent vers l'outil agricole 202 et qui peuvent par exemple servir de support (et éventuellement intégrer en partie comme indiqué dans le mode de réalisation préféré décrit) pour les dispositifs de guidage coopérant avec les doigts 42 ainsi que les dispositifs de verrouillage avec chacun une mâchoire inférieure 236, une mâchoire supérieure 238 et un ressort de rappel 240.

En résumé, l'accouplement d'un outil (dans l'exemple illustré l'outil agricole 100) à un engin (dans l'exemple illustré le tracteur agricole 200) peut se réaliser de la manière suivante.

Tout d'abord, l'outil est muni d'un bâti dit bâti attelé tandis que l'engin est muni d'un autre bâti dit bâti d'attelage. Le bâti attelé est muni de moyens lui permettant de venir se solidariser au bâti d'attelage.

En outre, l'outil est muni d'un arbre, dit arbre mené, destiné à être entrainé par l'engin de manière à lui fournir de l'énergie (ou de la puissance) pour lui permettre de réaliser sa fonction. L'engin est quant à lui muni d'un moteur comportant un arbre de sortie, appelé prise de force sur un tracteur agricole.

L'arbre mené de l'outil est muni d'une partie d'un dispositif d'accouplement et l'arbre de sortie de l'engin est muni d'une seconde partie dudit dispositif d'accouplement.

La partie du dispositif d'accouplement associée à l'arbre mené de l'outil comporte un élément, en une ou plusieurs pièces, qui est monté de telle sorte qu'il soit solidaire de l'arbre mené (par exemple montage avec cannelures et/ou goupille) et qui est muni d'un système à dent et rainure appelé premier crabot. Cet élément est monté pivotant dans un premier carter.

De même, la partie du dispositif d'accouplement associée à l'arbre de sortie de l'engin comporte un élément, en une ou plusieurs pièces, qui est monté de telle sorte qu'il soit solidaire de l'arbre de sortie et qui est muni d'un système à dents et rainure, ou second crabot, destiné à coopérer avec le premier crabot de telle sorte que le premier crabot vienne entrainer le second crabot, de préférence avec le moins de jeu possible. Un tel système à crabot permet de transmettre quasiment 100% de la puissance disponible sur l'arbre de sortie à l'arbre mené si les crabots sont bien adaptés l'un à l'autre. Ici, l'élément avec le second crabot est monté pivotant dans un palier dit palier intermédiaire qui lui même est monté dans un second carter, fixé sur l'engin, de manière à pouvoir coulisser par rapport audit second carter sensiblement parallèlement à l'arbre de sortie.

Le premier carter et le palier intermédiaire sont munis en outre de moyens de centrage, de préférence des moyens de centrage coniques.

Pour réaliser l'accouplement de l'outil (non motorisé) à l'engin (motorisé), un conducteur vient manœuvrer l'engin afin de le rapprocher de l'outil. Le bâti d'attelage est monté mobile sur l'engin et le conducteur rapproche le bâti d'attelage du bâti attelé en adaptant la position (hauteur du sol et inclinaison par rapport à la verticale notamment) du bâti d'attelage à celle du bâti attelé. Sur le bâti attelé, la partie du dispositif d'accouplement portée par l'outil est maintenue dans une position prédéterminée par un dispositif de maintien et support telle que cette partie du dispositif d'accouplement se trouve sensiblement face à l'autre partie du dispositif d'accouplement lorsque le bâti attelé est face au bâti d'attelage dans une position correspondant à peu de choses près (par exemple à quelques - de 0 à 20- centimètres).

Le conducteur manœuvre pour atteler le bâti attelé au bâti d'attelage. Les deux parties du dispositif d'accouplement se rapprochent l'une de l'autre. Elles sont disposées sur l'engin et l'outil de telle sorte que les parties coniques du premier carter et du palier intermédiaire viennent au contact l'une de l'autre au cours de cette manœuvre. De la sorte, un autocentrage de ces deux parties d'accouplement se réalise conduisant à amener le premier crabot face au second crabot. Un système de rapprochement, par exemple avec au moins un bras monté sur une partie du dispositif coopérant avec un doigt monté sur l'autre partie du dispositif, éventuellement commandé hydrauliquement, est utilisé pour finir le centrage des parties coniques l'une par rapport à l'autre. Les deux crabots sont alors alignés tout d'abord sans venir au contact l'un de l'autre. Lorsqu'une force suffisante (prédéterminée en fonction des dimensions du système) est exercée entre les deux parties coniques en direction de l'engin, le palier intermédiaire se déplace vers l'engin en coulissant par rapport au second carter permettant ainsi aux dents du premier crabot de venir au contact des dents du second crabot. Il y a ici peu de chances pour que les dents d'un crabot viennent coïncider avec les rainures de l'autre crabot mais ce cas peut arriver. Pour amener les crabots en prise, l'arbre de sortie de l'engin est entrainé en rotation. Des moyens de précontrainte poussent le palier intermédiaire vers l'outil si bien qu'en cours de rotation les deux crabots viennent engrener l'un avec l'autre. Les arbres sont accouplés. On peut alors venir verrouiller entre eux les bâtis. De préférence les moyens de maintien et de support de la partie du dispositif d'accouplement associée à l'outil sont déplacés de telle sorte que le premier carter puisse se mouvoir librement.

Comme décrit plus haut, parallèlement à cette opération d'accouplement, un verrouillage peut se réaliser automatiquement. Après déverrouillage, le désaccouplement se réalise en opérant de manière inverse.

Pour réaliser le déverrouillage, il suffit d'ouvrir chaque mâchoire supérieure 238. Ici aussi, comme pour les bras 220, il est prévu de rendre les deux mâchoires supérieures 238 solidaires en les reliant par un axe de liaison 250 (figure 25). Un vérin de déverrouillage 248 est alors prévu pour agir sur une mâchoire supérieure 238 pour ouvrir celle-ci. Par l'intermédiaire de l'axe de liaison 250, le vérin de déverrouillage 248 commande alors aussi l'ouverture de l'autre mâchoire supérieure 238.

Le dispositif d'attelage présenté permet à un conducteur d'un tracteur agricole de venir réaliser l'attelage d'un outil agricole sans avoir à quitter le poste de commande de son tracteur. L'attelage et l'accouplement mécanique de l'outil agricole peuvent se faire simplement et en toute sécurité. Aucune intervention manuelle au niveau de l'outil agricole 100 et/ou de l'attelage du tracteur agricole 200 n'est à faire.

De même, il est possible de retirer l'outil agricole attelé au tracteur agricole sans intervention manuelle, limitant ainsi tout risque de blessure.

Le système d'accouplement permet une parfaite transmission de la puissance du tracteur vers l'outil. Grâce au parfait alignement des arbres, aucune usure ou contrainte parasite n'est exercée sur le système.

Une fois attelé, le fonctionnement de l'outil n'est pas du tout altéré et tout se passe comme si l'outil avait été attelé directement sur le système de relevage trois points du tracteur.

Bien entendu, la présente invention ne se limite pas à la forme de réalisation préférée décrite et illustrée au dessin et aux variantes évoquées. Elle concerne également toutes les variantes de réalisation à la portée de l'homme du métier dans le cadre des revendications ci-après.

## Revendications

1. Dispositif d'accouplement de deux arbres bout à bout, comportant une paire de crabots (16, 28), chaque crabot étant conformé de manière à pouvoir être rendu solidaire d'une extrémité d'arbre à accoupler et les deux crabots (16, 28) étant de formes complémentaires, **caractérisé en ce qu'**un premier crabot (16) est monté pivotant dans un premier carter (6), **en ce qu'**un second crabot (28) est monté pivotant dans un palier intermédiaire (8), **en ce que** le palier intermédiaire (8) est monté coulissant dans un second carter (10) supposé fixe et distinct du premier carter (6), le palier intermédiaire (8) pouvant coulisser par rapport au second carter (10) selon une direction parallèle aux deux arbres à accoupler, dite direction longitudinale, et **en ce que** le palier intermédiaire (8) est précontraint élastiquement en direction du premier carter (6).

2. Dispositif d'accouplement selon la revendication 1, **caractérisé en ce que** le premier carter (6) porte une première surface conique (32) faisant face au second carter (10), **en ce que** le second carter (10) porte une seconde surface conique (56) faisant face au premier carter (6), les deux surfaces coniques étant de formes complémentaires de manière à réaliser un alignement des deux arbres, **en ce que** la première surface conique (32) ou la seconde surface conique (56) est montée coulissante longitudinalement par rapport au carter qui la porte, et **en ce que** la surface conique (56) coulissante est précontrainte élastiquement en direction de l'autre surface conique (32).

3. Dispositif d'accouplement selon la revendication 2, **caractérisé en ce que** la surface conique (56) coulissante et le carter (10) correspondant sont munis de moyens retardateurs (58, 64) tels que le déplacement de ladite surface conique (56) ne peut être initié que lorsqu'une contrainte minimale prédéfinie en direction longitudinale est exercée sur ladite surface conique (56) vers le carter (10) qui la porte.

4. Dispositif d'accouplement selon la revendication 3, **caractérisé en ce que** les moyens retardateurs comportent au moins une tige de guidage (58) solidaire de la surface conique (56) coulissante, **en ce que** ladite tige de guidage (58) comporte une zone de section rétrécie pouvant coulisser dans un alésage à l'intérieur du carter (10) correspondant, **en ce que** le carter (10) correspondant comporte une fente (62) s'étendant transversalement par rapport à l'alésage recevant au moins partiellement la tige de guidage (58) et intersectant ledit alésage, et **en ce qu'**un organe élastique (64) présentant deux branches est logée dans ladite fente (62), la section rétrécie étant disposée entre les deux branches de l'organe élastique (64).

5. Dispositif d'accouplement selon l'une des revendications 1 à 4, **caractérisé en ce qu'**il comporte en outre des moyens de connexion, lesdits moyens comportant de part et d'autre d'un crabot à chaque fois une saillie (42) solidaire du carter (6) correspondant, l'autre carter (10) portant, d'une part, à chaque fois des moyens de guidage (218) pour amener une saillie (42) vers un logement et, d'autre part, un crochet (220) monté pivotant autour d'un axe transversal (222) entre une position dite ouverte permettant à la saillie (42) d'entrer et de sortir de son logement et une position dite fermée dans laquelle le crochet (220) peut maintenir la saillie dans son logement en l'empêchant d'en sortir.

6. Dispositif d'accouplement selon la revendication 5, **caractérisé en ce que** les deux crochets (220) sont montés pivotants sur un axe transversal (222) commun, et **en ce que** le mouvement des crochets (220) est commandé par un vérin (244) double effet hydraulique.

7. Dispositif d'accouplement selon l'une des revendications 5 ou 6, **caractérisé en ce qu'**au moins un crochet (220) porte un pion de verrouillage (242) destiné à coopérer avec une paire de mâchoires (236, 238), lesdites mâchoires étant portées par le même carter (10) que celui portant les crochets (220) et étant disposées de telle sorte que le pion de verrouillage (242) se trouve entre les mâchoires (236, 238) lorsque le crochet (220) correspondant est en position fermée.

8. Dispositif d'accouplement selon la revendication 7, **caractérisé en ce que** pour chaque paire de mâchoires, une mâchoire (236) est fixe et l'autre (238) est mobile, **en ce qu'**un ressort de rappel (240) précontraint la mâchoire mobile (238) vers la mâchoire fixe (236), et **en ce qu'**un vérin (248) permet d'agir à l'encontre du ressort de rappel (240) pour éloigner la mâchoire mobile (238) de la mâchoire fixe (236).

9. Dispositif d'attelage d'un outil, tel un outil agricole (100), sur un système de relevage d'un engin, tel un tracteur agricole (200), équipé d'un arbre de sortie menant, comprenant :
- un premier bâti dit bâti d'attelage (202) et doté d'organes de fixation permettant une fixation au système de relevage de l'engin,
- un second bâti dit bâti attelé (102) et doté d'organes de fixation permettant une fixation à l'outil,
le bâti d'attelage (202) et le bâti attelé (102) présentant chacun une face de jonction, lesdites faces de jonction étant adaptées pour permettre l'appairage du bâti attelé au bâti d'attelage,
- des moyens de verrouillage relatif du bâti attelé (102) sur le bâti d'attelage (202) dans la position appairée,
**caractérisé en ce que**
ledit dispositif d'attelage comporte en outre un dispositif d'accouplement de deux arbres bout-à-bout selon l'une des revendications 1 à 5,
ledit dispositif d'accouplement étant destiné à être monté entre l'arbre de sortie menant de l'engin et un arbre mené de l'outil.

10. Dispositif d'attelage selon la revendication 9, **caractérisé en ce que** le bâti attelé (102) comporte deux bras (116) montés pivotants entre une position rapprochée dans laquelle les extrémités libres des bras portent le premier carter (6) du dispositif d'accouplement et une position ouverte dans laquelle les bras (116) sont écartés et leurs extrémités libres distantes du premier carter (6).

11. Dispositif d'attelage selon l'une des revendications 9 ou 10, **caractérisé en ce que** le bâti d'attelage (202) présente une structure mécanosoudée comportant une traverse (208) de laquelle s'étendent d'un même côté de ladite traverse deux jambes (210), et **en ce que** le bâti attelé (102) présente une structure mécanosoudée comportant une traverse supérieure (110), une traverse inférieure (108) et deux montants (112) reliant les extrémités de la traverse inférieure aux extrémités de la traverse supérieure, **en ce que** la traverse (208) du bâti d'attelage présente au moins deux pions de centrage (214), **en ce que** la traverse supérieure (110) du bâti attelé comporte une coiffe (120) s'étendant vers le bâti d'attelage et présentant au moins deux logements (122) destinés chacun à recevoir un pion de centrage (214).

12. Dispositif d'attelage selon la revendication 11, **caractérisé en ce que** chaque jambe (210) du bâti d'attelage présente à son extrémité libre une platine sur laquelle est disposé au moins un doigt de verrouillage (216) et **en ce que** la traverse inférieure (108) du bâti attelé comporte des trous de verrouillage (124) disposé de manière à pouvoir accueillir les doigts de verrouillage.

13. Dispositif d'attelage selon l'une des revendications 11 ou 12, **caractérisé en ce qu'**il comporte des moyens d'actionnement des bras (116) montés pivotants, lesdits moyens d'actionnement coopérant avec la platine sur laquelle est disposé au moins un doigt de verrouillage de telle sorte qu'en position de verrouillage du bâti attelé sur le bâti d'attelage les bras sont dans leur position ouverte.

14. Dispositif d'attelage selon l'une des revendications 9 à 12, **caractérisé en ce que** le premier carter (6) du dispositif d'accouplement est monté du côté du bâti attelé (102) tandis que le second carter (10) est monté du côté du bâti d'attelage (202).

## Patentansprüche

1. Vorrichtung zum Koppeln zweier Wellen Ende an Ende, umfassend ein Paar Kopplungsklauen (16, 28), wobei jede Kopplungsklaue so ausgebildet ist, dass sie mit einem Ende der zu koppelnden Welle fest verbunden werden kann, und wobei die beiden Kopplungsklauen (16, 28) komplementäre Formen aufweisen, **dadurch gekennzeichnet, dass** eine erste Kopplungsklaue (16) schwenkbar in einem ersten Gehäuse (6) gelagert ist, dass eine zweite Kopplungsklaue (28) schwenkbar in einem Zwischenlager (8) gelagert ist, dass das Zwischenlager (8) verschiebbar in einem zweiten Gehäuse (10) gelagert ist, das als feststehend und vom ersten Gehäuse (6) getrennt angenommen wird, wobei das Zwischenlager (8) in Bezug auf das zweite Gehäuse (10) in einer zu den beiden zu koppelnden Wellen parallelen Richtung, der sogenannten Längsrichtung, verschiebbar ist, und dass das Zwischenlager (8) in Richtung des ersten Gehäuses (6) elastisch vorgespannt ist.

2. Kopplungsvorrichtung nach Anspruch 1, **dadurch gekennzeichnet, dass** das erste Gehäuse (6) eine erste konische Fläche (32) aufweist, die dem zweiten Gehäuse (10) gegenüberliegt, dass das zweite Gehäuse (10) eine zweite konische Fläche (56) aufweist, die dem ersten Gehäuse (6) gegenüberliegt, wobei die beiden konischen Flächen komplementäre Formen aufweisen, um eine Ausrichtung der beiden Wellen zu erreichen, dass die erste konische Fläche (32) oder die zweite konische Fläche (56) in Längsrichtung bezüglich des Gehäuses, das sie trägt, verschiebbar angebracht ist, und dass die verschiebbare konische Fläche (56) in Richtung der anderen konischen Fläche (32) elastisch vorgespannt ist.

3. Kopplungsvorrichtung nach Anspruch 2, **dadurch gekennzeichnet, dass** die verschiebbare konische Fläche (56) und das entsprechende Gehäuse (10) mit Verzögerungsmitteln (58, 64) versehen sind, so dass die Verschiebung der konischen Fläche (56) nur dann eingeleitet werden kann, wenn eine vordefinierte Mindestspannung in Längsrichtung auf die konische Fläche (56) in Richtung des sie tragenden Gehäuses (10) ausgeübt wird.

4. Kopplungsvorrichtung nach Anspruch 3, **dadurch gekennzeichnet, dass** die Verzögerungsmittel wenigstens einen mit der verschiebbaren konischen Fläche (56) verbundenen Führungsstift (58) umfassen, dass der Führungsstift (58) einen Bereich mit verengtem Querschnitt aufweist, der in einer Bohrung im Inneren des entsprechenden Gehäuses (10) verschoben werden kann, dass das Gehäuse (10) einen Schlitz (62) aufweist, der sich quer zu der Bohrung erstreckt, die die Führungsstange (58) wenigstens teilweise aufnimmt, und die Bohrung schneidet, und dass ein elastisches Element (64) mit zwei Schenkeln in dem Schlitz (62) angeordnet ist, wobei der verengte Querschnitt zwischen den beiden Schenkeln des elastischen Elements (64) angeordnet ist.

5. Kopplungsvorrichtung nach einem der Ansprüche 1 bis 4, **dadurch gekennzeichnet, dass** sie ferner Verbindungsmittel umfasst, wobei diese Mittel auf beiden Seiten einer Klauenkopplung jeweils einen Vorsprung (42) aufweisen, der fest mit dem entsprechenden Gehäuse (6) verbunden ist, wobei das andere Gehäuse (10) einerseits jeweils Führungsmittel (218) zum Führen eines Vorsprungs (42) zu einer Aufnahme und andererseits einen Haken (220) umfasst, der um eine Querachse (222) zwischen einer sogenannten offenen Position, in der der Vorsprung (42) in seine Aufnahme hinein- und aus dieser herausgleiten kann, und einer sogenannten geschlossenen Position, in der der Haken (220) den Vorsprung in seiner Aufnahme halten und daran hindern kann, aus dieser herauszugleiten, schwenkbar angebracht ist.

6. Kopplungsvorrichtung nach Anspruch 5, **dadurch gekennzeichnet, dass** die beiden Haken (220) schwenkbar um eine gemeinsame Querachse (222) angebracht sind und dass die Bewegung der Haken (220) durch einen doppeltwirkenden Hydraulikzylinder (244) gesteuert wird.

7. Kopplungsvorrichtung nach einem der Ansprüche 5 oder 6, **dadurch gekennzeichnet, dass** wenigstens ein Haken (220) einen Verriegelungsstift (242) trägt, der dazu ausgebildet ist, mit einem Paar Backen (236, 238) zusammenzuwirken, wobei die Backen von demselben Gehäuse (10) getragen werden wie die Haken (220) und so angeordnet sind, dass sich der Verriegelungsstift (242) zwischen den Backen (236, 238) befindet, wenn der entsprechende Haken (220) in der geschlossenen Position ist.

8. Kopplungsvorrichtung nach Anspruch 7, **dadurch gekennzeichnet, dass** für jedes Backenpaar eine Backe (236) feststehend und die andere (238) beweglich ist, dass eine Rückstellfeder (240) die bewegliche Backe (238) in Richtung der feststehenden Backe (236) vorspannt und dass ein Zylinder (248) es ermöglicht, gegen die Rückstellfeder (240) zu wirken, um die bewegliche Backe (238) von der feststehenden Backe (236) zu entfernen.

9. Vorrichtung zum Ankoppeln eines Werkzeugs, beispielsweise eines landwirtschaftlichen Werkzeugs (100), an ein Hubsystem einer Maschine, beispielsweise eines landwirtschaftlichen Traktors (200), der mit einer Ausgangswelle ausgestattet ist, umfassend:
- einen ersten Rahmen, den sogenannten Ankopplungsrahmen (202), der mit Befestigungselementen ausgestattet ist, die eine Befestigung am Hubsystem der Maschine ermöglichen,
- einen zweiten Rahmen, den sogenannten angekoppelten Rahmen (102), der mit Befestigungselementen ausgestattet ist, die eine Befestigung am Gerät ermöglichen,
wobei der Ankopplungsrahmen (202) und der angekoppelte Rahmen (102) jeweils eine Verbindungsfläche aufweisen, wobei die Verbindungsflächen so ausgelegt sind, dass sie die Kopplung des Ankopplungsrahmens mit dem angekoppelten Rahmen ermöglichen,
- Mittel zum relativen Verriegeln des angekoppelten Rahmens (102) an dem Ankopplungsrahmen (202) in der gekoppelten Position,
**dadurch gekennzeichnet,**
**dass** die Kopplungsvorrichtung ferner eine Vorrichtung zum Koppeln zweier Wellen Ende an Ende gemäß einem der Ansprüche 1 bis 5 umfasst, wobei die Kopplungsvorrichtung dazu bestimmt ist, zwischen der Ausgangswelle des Fahrzeugs und einer Abtriebswelle des Werkzeugs montiert zu werden.

10. Kopplungsvorrichtung nach Anspruch 9, **dadurch gekennzeichnet, dass** der angekoppelte Rahmen (102) zwei Arme (116) aufweist, die schwenkbar angebracht sind zwischen einer angenäherten Position, in der die freien Enden der Arme das erste Gehäuse (6) der Kopplungsvorrichtung tragen, und einer offenen Position, in der die Arme (116) gespreizt sind und ihre freien Enden vom ersten Gehäuse (6) entfernt sind.

11. Kopplungsvorrichtung nach einem der Ansprüche 9 oder 10, **dadurch gekennzeichnet, dass** der Ankopplungsrahmen (202) eine geschweißte Konstruktion, umfassend einen Querträger (208) aufweist, von dem sich auf derselben Seite des Querträgers zwei Schenkel (210) erstrecken, und dass der angekoppelte Rahmen (102) eine geschweißte Konstruktion, umfassend einen oberen Querträger (110), einen unteren Querträger (108) und zwei Stützen (112) aufweist, die die Enden des unteren Querträgers mit den Enden des oberen Querträgers verbinden, dass der Querträger (208) des Ankopplungsrahmens wenigstens zwei Zentrierstifte (214) aufweist, dass der obere Querträger (110) des angekoppelten Rahmens eine sich zum Ankopplungsrahmen hin erstreckende Abdeckung (120) aufweist, die wenigstens zwei Aufnahmen (122) aufweist, die jeweils zur Aufnahme eines Zentrierstifts (214) bestimmt sind.

12. Kopplungsvorrichtung nach Anspruch 11, **dadurch gekennzeichnet, dass** jeder Schenkel (210) des Ankopplungsrahmens an seinem freien Ende eine Platte aufweist, auf der wenigstens ein Verriegelungsfinger (216) angeordnet ist und dass der untere Querträger (108) des angekoppelten Rahmens Verriegelungslöcher (124) aufweist, die so angeordnet sind, dass sie die Verriegelungsfinger aufnehmen können.

13. Kopplungsvorrichtung nach einem der Ansprüche 11 oder 12, **dadurch gekennzeichnet, dass** sie Mittel zum Betätigen der schwenkbar gelagerten Arme (116) umfasst, wobei die Betätigungsmittel mit der Platte zusammenwirken, auf der wenigstens ein Verriegelungsfinger angeordnet ist, so dass sich die Arme in der Verriegelungsposition des angekoppelten Rahmens am Ankopplungsrahmen in ihrer geöffneten Position befinden.

14. Kopplungsvorrichtung nach einem der Ansprüche 9 bis 12, **dadurch gekennzeichnet, dass** das erste Gehäuse (6) der Kopplungsvorrichtung auf der Seite des angekoppelten Rahmens (102) angebracht ist, während das zweite Gehäuse (10) auf der Seite des Ankopplungsrahmens (202) angebracht ist.

## Claims

1. Coupling device for coupling two shafts end-to-end, comprising a pair of dog clutch members (16, 28), each dog clutch member being configured so as to be able to be secured to an end of a shaft to be coupled, and the two dog clutch members (16, 28) being of complementary shapes, **characterised in that** a first dog clutch member (16) is pivotably mounted in a first casing (6), **in that** a second dog clutch member (28) is pivotably mounted in an intermediate bearing (8), **in that** the intermediate bearing (8) is slidably mounted in a second casing (10) assumed to be fixed and distinct from the first casing (6), the intermediate bearing (8) being able to slide relative to the second casing (10) in a direction parallel to the two shafts to be coupled, termed the longitudinal direction, and **in that** the intermediate bearing (8) is elastically prestressed in the direction of the first casing (6).

2. Coupling device according to claim 1, wherein the first casing (6) carries a first conical surface (32) facing the second casing (10), wherein the second casing (10) carries a second conical surface (56) facing the first casing (6), the two conical surfaces being of complementary shapes so as to achieve an alignment of the two shafts, wherein the first conical surface (32) or the second conical surface (56) is mounted to slide longitudinally relative to the casing which carries it, and wherein the sliding conical surface (56) is elastically preloaded in the direction of the other conical surface (32).

3. Coupling device according to claim 2, wherein the sliding conical surface (56) and the corresponding casing (10) are provided with delay means (58, 64) such that movement of said conical surface (56) can only be initiated when a predefined minimum load in the longitudinal direction is exerted on said conical surface (56) towards the casing (10) which carries it.

4. Coupling device according to claim 3, wherein the delay means comprise at least one guide rod (58) integral with the sliding conical surface (56), wherein said guide rod (58) comprises a region of narrowed cross-section which can slide within a bore inside the corresponding casing (10), wherein the corresponding casing (10) comprises a slot (62) extending transversely relative to the bore at least partially receiving the guide rod (58) and intersecting said bore, and wherein an elastic member (64) having two arms is housed in said slot (62), the narrowed cross-section being arranged between the two arms of the elastic member (64).

5. Coupling device according to one of claims 1 to 4, wherein it further comprises connection means, said means comprising, on each side of a dog clutch member in each case, a projection (42) integral with the corresponding casing (6), the other casing (10) carrying, on the one hand, guide means (218) in each case for bringing a projection (42) towards a housing, and on the other hand, a hook (220) mounted to pivot about a transverse shaft (222) between a so-called open position allowing the projection (42) to enter and exit its housing and a so-called closed position in which the hook (220) can keep the projection in its housing by preventing its exit.

6. Coupling device according to claim 5, wherein the two hooks (220) are mounted to pivot on a common transverse shaft (222), and wherein the movement of the hooks (220) is controlled by a double-acting hydraulic cylinder (244).

7. Coupling device according to one of claims 5 or 6, wherein at least one hook (220) carries a locking pin (242) intended to cooperate with a pair of jaws (236, 238), said jaws being carried by the same casing (10) as the one carrying the hooks (220) and being arranged so that the locking pin (242) is located between the jaws (236, 238) when the corresponding hook (220) is in the closed position.

8. Coupling device according to claim 7, wherein, for each pair of jaws, one jaw (236) is fixed and the other (238) is movable, wherein a return spring (240) prestresses the movable jaw (238) towards the fixed jaw (236), and wherein a cylinder (248) makes it possible to act against the return spring (240) to move the movable jaw (238) away from the fixed jaw (236).

9. Hitching device for hitching an implement, such as an agricultural implement (100), to a lifting system of a machine, such as an agricultural tractor (200), equipped with a driving output shaft, comprising:
- a first frame known as the towing frame (202) and equipped with attachment members enabling attachment to the lifting system of the machine,
- a second frame called a towed frame (102) and equipped with attachment members enabling attachment to the implement,
the towing frame (202) and the towed frame (102) each having a joining face, said joining faces being suitable for enabling the pairing of the towed frame to the towing frame,
- means for relative locking of the towed frame (102) to the towing frame (202) in the paired position,
**characterized in that**
said hitching device further comprises a coupling device for coupling two shafts end-to-end according to one of claims 1 to 5,
said coupling device being intended to be mounted between the driving output shaft of the machine and a driven shaft of the implement.

10. Hitching device according to claim 9, wherein the towed frame (102) comprises two arms (116) mounted to pivot between a close-together position in which the free ends of the arms carry the first casing (6) of the coupling device and an open position in which the arms (116) are spaced apart and their free ends are at a distance from the first casing (6).

11. Hitching device according to one of claims 9 or 10, wherein the towing frame (202) has a welded structure comprising a crossmember (208) from which two legs (210) extend on a same side of said crossmember, and wherein the towed frame (102) has a welded structure comprising an upper crossmember (110), a lower crossmember (108), and two uprights (112) connecting the ends of the lower crossmember to the ends of the upper crossmember, wherein the crossmember (208) of the towing frame has at least two centering pins (214), wherein the upper crossmember (110) of the towed frame comprises a cap (120) extending towards the towing frame and having at least two housings (122) each intended to receive a centering pin (214).

12. Hitching device according to claim 11, wherein each leg (210) of the towing frame has at its free end a plate on which is arranged at least one locking finger (216) and wherein the lower crossmember (108) of the towed frame comprises locking holes (124) arranged to accommodate the locking fingers.

13. Hitching device according to one of claims 11 or 12, wherein it comprises actuating means for actuating the pivotably mounted arms (116), said actuating means cooperating with the plate on which is arranged at least one locking finger such that, in the locking position of the towed frame to the towing frame, the arms are in their open position.

14. Hitching device according to one of claims 9 to 12, wherein the first casing (6) of the coupling device is mounted on the towed frame (102) side while the second casing (10) is mounted on the towing frame (202) side.
